(19) Europäisches Patentamt
European Patent Office
Office européen des brevets

(11) **EP 3 054 280 B1**

(12) **EUROPÄISCHE PATENTSCHRIFT**

(45) Veröffentlichungstag und Bekanntmachung des Hinweises auf die Patenterteilung:
**08.04.2026   Patentblatt 2026/15**

(21) Anmeldenummer: **15153757.8**

(22) Anmeldetag: **04.02.2015**

(51) Internationale Patentklassifikation (IPC):
**G01N 21/3504** *(2014.01)*    **G01N 21/39** *(2006.01)*
**G01J 3/433** *(2006.01)*    **G01N 21/03** *(2006.01)*

(52) Gemeinsame Patentklassifikation (CPC):
**G01N 21/3504; G01J 3/4338; G01N 21/39;**
G01N 2021/0396

(54) **Optisches Messgerät und Verfahren zur Gasdetektion**

Optical measuring device and method for gas detection

Appareil de mesure optique et procédé de détection de gaz

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.08.2016   Patentblatt 2016/32**

(73) Patentinhaber: **Axetris AG**
**6056 Kägiswil (CH)**

(72) Erfinder:
- **Wittmann, Andreas**
  **6074 Giswil (CH)**
- **Zufferey, Marc-Oliver**
  **6053 Alpnachstaad (CH)**
- **Bögli, Urs**
  **8133 Esslingen (CH)**
- **Hassler, Kai**
  **6005 Luzern (CH)**

(74) Vertreter: **Witte, Weller & Partner Patentanwälte mbB**
**Postfach 10 54 62**
**70047 Stuttgart (DE)**

(56) Entgegenhaltungen:
**EP-A1- 1 927 831**    **US-A- 4 684 258**

- **SHANG-QIAN WU ET AL: "Efficient Reduction of Fringe Noise in Trace Gas Detection with Diode Laser Multipass Absorption Spectroscopy", JAPANESE JOURNAL OF APPLIED PHYSICS, JAPAN SOCIETY OF APPLIED PHYSICS, JP, vol. 39, no. 7A, 1 July 2000 (2000-07-01), pages 4034 - 4040, XP009184859, ISSN: 0021-4922, DOI: 10.1143/JJAP.39.4034**
- **PATRICK EHLERS ET AL: "Use of etalon-immune distances to reduce the influence of background signals in frequency-modulation spectroscopy and noise-immune cavity-enhanced optical heterodyne molecular spectroscopy", JOURNAL OF THE OPTICAL SOCIETY OF AMERICA - B., vol. 31, no. 12, 4 November 2014 (2014-11-04), US, pages 2938 - 2945, XP055197385, ISSN: 0740-3224, DOI: 10.1364/JOSAB.31.002938**
- **MASIYANO D ET AL: "Self-mixing interference effects in tunable diode laser absorption spectroscopy", APPLIED PHYSICS B ; LASERS AND OPTICS, SPRINGER, BERLIN, DE, vol. 96, no. 4, 6 August 2009 (2009-08-06), pages 863 - 874, XP019739165, ISSN: 1432-0649, DOI: 10.1007/S00340-009-3690-X**

**Beschreibung**

Die Erfindung betrifft ein optisches Messsystem und ein Verfahren zur Gasdetektion mit einem Lichtemitter und mindestens einem Lichtdetektor als optoelektronische Komponenten, und mit mindestens einer zwischen dem Lichtemitter und dem mindestens einen Lichtdetektor angeordneten optomechanischen Komponente, die für Lichtstrahlen optisch wirksame Grenzflächen aufweist, wobei der Lichtemitter und der mindestens eine Lichtdetektor gemeinsam in einem Gehäuse oder getrennt in jeweils einem Gehäuse angeordnet sind, und das Gehäuse optional ein Gehäusefenster aufweist, das eine optomechanische Komponente bildet, und wobei der Lichtemitter einen modulierten Hauptlichtstrahl einer mittleren Wellenlänge $\lambda_0$ mit einer Modulationsspanne $\Delta\lambda$ emittiert, und zumindest ein an mindestens einer optisch wirksamen Grenzfläche mindestens einer optomechanischen Komponente in Richtung des Lichtemitters und/oder Lichtdetektors anteilig aus dem Hauptlichtstrahl reflektierter/gestreuter Streulichtstrahl des Hauptlichtstrahls durch Interferenz mit dem Hauptlichtstrahl zu Self-Mixing in dem Lichtemitter und/oder zu Etalons an dem Lichtdetektor führt, und wobei sich durch die Interferenz des Hauptlichtstrahls mit dem Streulichtstrahl ein interferierter Hauptlichtstrahl ergibt und wobei das Messsignal des Lichtdetektors einen Störsignalanteil und einen Hauptsignalanteil umfasst und das Störsignal ein mit einer Demodulationsfrequenz demoduliertes Messsignal des Lichtdetektors beeinflusst.

Derartige optische Messsysteme werden für verschiedene Messaufgaben verwendet, wie z. B. für die Längenmessung oder Spektroskopie. Bei solchen Messsystemen wird als Lichtemitter häufig eine Laserdiode und als Lichtdetektor eine geeignete Photodiode verwendet. Die Laserabsorptionsspektroskopie wird beispielsweise bei der Gasdetektion angewendet. Dabei wird der von dem Lichtemitter ausgestrahlte Hauptlichtstrahl nach dem Durchtritt durch ein Gas oder Gasgemisch mittels des Lichtdetektors erfasst und das empfangene Signal einem Signalanalysator, insbesondere einem Lock-in-Verstärker zur Auswertung zugeleitet. Der Signalanalysator trennt konstante Interferenzmuster von dem Messsignal des Lichtdetektors ab. Er kann jedoch sich zeitlich ändernde Interferenzmuster, aus dem empfangenden Signal nicht vollständig eliminieren, sodass die Nachweisempfindlichkeit für das zu detektierende Gas aufgrund des verstärkten Rauschens deutlich sinkt. Auslöser für sich zeitlich ändernde Interferenzmuster sind unter anderem Temperatureinflüsse, die die Länge des optischen Weges für den Hauptlichtstrahl von dem Lichtemitter zu dem Lichtdetektor verändern. Des Weiteren können Reflexionen und/oder Streuungen des Hauptlichtstrahls an Innenflächen des Gehäuses des Messsystems oder an Grenzflächen von in dem Gehäuse angeordneten strahlformenden und/oder strahllenkenden optischen bzw. optomechanischen Komponenten, wie beispielsweise Linsen oder Spiegel, oder an der Innen- oder Außenfläche des Gehäusefensters derartige Interferenzmuster herbeiführen. Die Reflexionen bzw. Streuungen, können Streulichtstrahlen bewirken, die auf den Lichtemitter und/oder den Lichtdetektor gerichtet sind. Derartige Streulichtstrahlen verursachen Self-Mixing im Lichtemitter und/oder Etalons am Lichtdetektor, indem sie mit dem Hauptlichtstrahl unter Bildung von Interferenzmustern interferieren und einen interferierten Hauptlichtstrahl bilden, der von dem Lichtdetektor empfangen wird. Diese Interferenzmuster sind ebenfalls temperaturabhängig und können sich somit zeitlich ändern. Self-Mixing und Etalons werden durch die unterschiedlich lange optische Weglänge der Streulichtstrahlen von der den Hauptlichtstrahl jeweils anteilig reflektierenden optischen und/oder optomechanischen Komponente bis zu dem Lichtemitter bzw. dem Lichtdetektor gegenüber der optischen Weglänge des Hauptlichtstrahls bewirkt. Für die Etalons ist der Abstand der reflektierenden bzw. streuenden optischen und/oder optomechanischen Komponente bis zu dem Lichtdetektor maßgebend, für das Self-Mixing der Abstand der entsprechenden Komponente zu der Apertur des Lichtemitters, die für den durch die Apertur in den Resonator eintretenden Streulichtstrahl einen "Empfänger" bildet und mit an der Innenseite des Lasers anteilig rückreflektierten Hauptstrahl interferiert.

Bei der Laserabsorptionsspektroskopie für die Gasdetektion wird häufig die Wellenlängenmodulationsmethode angewendet. Dabei wird die Wellenlänge und üblicherweise auch die Intensität des Hauptlichtstrahls des Lichtemitters, beispielsweise eines kontinuierlich abstimmbaren Dioden-Lasers, mit einer Frequenz f moduliert, wobei die Wellenlänge über ein mögliches Absorptionsspektrum einer zu analysierenden Probe variiert wird. Das Laserlicht wird von der Gasprobe absorbiert, wenn die Wellenlänge des Lichtes der Resonanzfrequenz des Gases entspricht bzw. über diese variiert wird. Trifft der Hauptlichtstrahl nach dem Passieren der Gasprobe auf den Lichtdetektor, z.B. auf eine Photodiode, so umfasst das Ausgangssignal des Lichtdetektors Wechselspannungskomponenten bei der Modulationsfrequenz f und bei den überlagernden höheren Oberwellenfrequenzen mf, wobei m eine natürliche positive Zahl ist. Die Demodulation des Ausgangssignals des Lichtdetektors bei einer Oberwellenfrequenz mf verschiebt die Messung zu einem höheren Frequenzband mf mit geringerem 1/f Rauschen, wodurch die Messempfindlichkeit des optischen Messsystems verbessert werden kann.

Bei der Verwendung von Lasern als Lichtemitter ist, bedingt durch die relativ große Kohärenzlänge, insbesondere das Auftreten von Interferenzen zwischen dem vom Lichtemitter ausgehenden Hauptlichtstrahl und von Streulichtstrahlen, die durch unerwünschte Reflexionen oder Streuungen des Hauptlichtstrahls entstehen, besonders störend. Es sind dabei zwei verschiedene Phänomene zu unterscheiden. Das als Self-Mixing bekannte Phänomen der Beeinflussung der Lichtemission durch in die Laserapertur des Lasers rückgekoppelte Strahlung wirkt sich besonders stark bei der Messung aus, da die rückgekoppelte Strahlung im Laser verstärkt wird. In der Praxis ist die Hauptursache für das Self-Mixing oftmals die Streuung oder Reflexion des Hauptlichtstrahls an dem Gehäusefenster, das zum Austritt des Hauptlichtstrahls vorgesehen ist und den Laserlichtemitter vor Umwelteinflüssen, wie z.B. Verschmutzung oder Umgebungsfeuchte schützt. Durch Streuung ist dieses Phänomen auch bei geneigtem Gehäusefenster vorhanden, da ein Teil des Lichtes auf direktem oder indirektem Weg, zum Beispiel durch Streuung an der Gehäuseinnenwand, in die Laserapertur rückgekoppelt werden kann. Andere Oberflächen, die sich weiter weg von der Apertur des Lichtemitters befinden, können ebenfalls Self-Mixing verursachen (z.B. die Reflexion/Streuung an der Photodiode). Typischerweise ist deren Einfluss aber geringer. Das zweite Phänomen das in optischen Messsystemen auftritt sind Interferenzen auf dem Detektor, die aufgrund unterschiedlicher optischer Weglängen von Haupt- und Streustrahl herrühren und als Etalons bezeichnet werden. Etalons haben ihre Ursache analog zu Self-Mixing aufgrund von Streulichtstrahlen an allen optoelektronischen und optomechanischen Komponenten im Messsystem, die dann auf dem Detektor mit dem Hauptstrahl interferieren. Um die Verfälschung des Messsignals des Lichtdetektors und damit der Messwerte durch Self-Mixing und/oder Etalons zu minimieren, müssen entweder das Self-Mixing bzw. die Etalons selbst reduziert werden oder es muss deren Einfluss auf den Messwert minimiert werden.

Zur Abschwächung der genannten Störungen sind aus dem Stand der Technik die verschiedensten Maßnahmen bekannt. Dazu zählen insbesondere die Entspiegelung aller Gehäusefenster, die keilförmige Ausbildung der Gehäusefenster und die verkippte, d.h. geneigte Anordnung der Gehäusefenster im Strahlengang, um Streuungen möglichst zu verhindern oder aus dem Strahlengang des Hauptlichtstrahls abzulenken, die Interferenzen mit dem Hauptlichtstrahl und damit Self-Mixing bewirken könnten. Des Weiteren können absorbierende Beschichtungen im Gehäuse des optischen Messsystems und/oder im Strahlengang angeordnete Blenden Reflexionen und Streuungen mindern. Trotz dieser wirksamen Maßnahmen lassen sich nicht alle Reflexionen und Streuungen des Hauptlichtstrahls verhindern, die zu Self-Mixing führen, das in der Regel einen starken negativen Störeinfluss für das Messsignal des Lichtdetektors bei optischen Systemen mit kohärenter Strahlung bildet. Bei Betrieb ist es oft so, dass die Gehäusefenster und Oberflächen solcher optischer Messsysteme verschmutzen, z.B. durch Staub oder Kondensation. Durch diese Verschmutzung nimmt die Streuung des Hauptlichtstrahls stark zu und die oben erwähnten Störeinflüsse verstärken sich so mit der Lebensdauer des Systems. Es ist also für die Lebensdauer respektive für die Servicezykluszeit von solchen optischen Messsystemen von Vorteil, das System so aufzubauen, dass sich die unvermeidbaren Verschmutzungen möglichst wenig auf das Messsignal des Systems auswirken.

Bei der Messung von Spektren sind alle vorstehend genannten Störungen typischerweise als periodische Signale sichtbar, die vom Fachmann als "fringes" bezeichnet werden. Self-Mixing und Etalons führen bei Tunable Diode Laser Spectroscopy (TDLS) - Systemen zu einer Verzerrung der gemessenen Gas-absorptionslinie, welche nicht einfach durch Kalibrierung oder rechnerische Verfahren eliminiert werden kann. Besonders ungünstig sind dabei periodische Störungen mit einer Periode in der Größenordnung der Breite der gemessenen Absorptionslinie.

Im Prinzip lässt sich das Phänomen Self-mixing mit einem optischen Isolator stark reduzieren. Leider sind gute Isolatoren für nicht-Telekom-Wellenlängen sehr teuer, sodass sie in Industrieanwendungen selten eingesetzt werden. Zudem ist zu beachten, dass der optische Isolator selbst auch optische Interfaces hat, wobei das dem Laser zugewandte optische Interface des optischen Isolators durch Reflexion/Streuung auch Self-mixing erzeugen kann. Persson et al. schlägt ein Verfahren "intensity referencing" vor, was Mithilfe von Balanced Detection den Effekt von Self-Mixing reduziert. Es wurden damit jedoch nur Interferenzamplituden-Reduktionen von ca. einem Faktor 10 erreicht (Appl. Phys.B 87, 523-530 (2007)). Webster beschreibt eine sehr einfache Methode um Etalons zu verhindern, indem er eine für die Laserwellenlänge transparente planparallele Platte verkippt in den Teil des optischen Weges einfügt. Durch periodisches Verschwenken der geneigten Platte während der Messung wird erreicht, dass sich aufgrund der sich periodisch ändernden optischen Weglänge das Interferenzsignal herausmittelt. Mit dieser Lösung konnte das Interferenzsignal um einen Faktor 30 reduziert werden (Opt. Soc. Am. B 2, 1464 (1985)). Um den Verschleiß von mechanisch bewegten Bauelementen zu vermeiden, was zu einer Erhöhung der Lebensdauer des Sensors führt, können Piezo-basierte Aktuatoren eingesetzt werden. Diese erlauben es jedoch meist nur geringe Wegdifferenzunterschiede zu erzeugen, wobei diese Elemente nur für die Mittelung von Interferenzen mit im Vergleich zur Gasabsorptionslinien-Breite sehr kleinem freien Spektralbereich effizient einsetzbar sind. Silver and Stanton verwenden beispielsweise einen piezoelektrischen Transducer (Patent US4934816) der die longitudinale Auslenkung des Spiegels einer Multipathzelle variiert und so die Interferenzen aufgrund der Spiegelanordnung herausmittelt. Solche piezoelektrischen Transducer sind jedoch meist relativ teuer. Reid et al. haben gezeigt, dass es durch Beaufschlagen einer zusätzlichen (im Vergleich zur eigentlichen Modulationsfrequenz) langsameren Frequenz auf das Modulationssignal möglich ist, solche Interferenzen auch ohne Veränderung der optischen Weglängen zu mitteln (Appl. Opt. 19, 3349-3354 (1980)). Dieses Prinzip ist jedoch nur bei Interferenzen mit sehr kleinem freien Spektralbereich sinnvoll anwendbar, da über mindestens eine Periode gemittelt werden muss. Nahezu dasselbe Ergebnis kann jedoch auch durch eine Tiefpass-Filterung z.B. durch Verwendung von Signal-Mittelung in der Datenverarbeitung erreicht werden. Dabei muss sich der freie Spektralbereich deutlich von der Breite der Gas-Absorptionslinie unterschieden, andernfalls wird auch das Absorptionssignal bei der Mittelung beeinflusst. Ebenso beschreibt Shang-Qian Wu et al.: "Efficient Reduction of Fringe Noise in Trace Gas Detection with Diode Laser Multipass Absorption Spectroscopy", JAPANESE JOURNAL OF APPLIED PHYSICS, JAPAN SOCIETY OF APPLIED PHYSICS, JP, Bd. 39, Nr. 7A, 1. Juli 2000 (2000-07-01), Seiten 4034-4040, die Länge einer Multipass-Zelle derart groß zu wählen, dass der freie Spektralbereich klein und das demodulierte Messsignal damit im Post-Processing "filterbar" ist. Ehlers et al.: "Use of etalon-immune distances to reduce the influence of background signals in frequency-modulation spectroscopy and noise-immune cavity-enhanced optical heterodyne molecular spectroscopy," J. Opt. Soc. Am. B 31, 2938-2945, 2014 beschreibt Verbesserungen im Bereich der FM-Spektroskopie, d.h. im Bereich der Frequenzmodulations-Spektroskopie. Die vorangegangenen Lösungsvorschläge sind meist nur spezifisch für ein bestimmtes Problem effizient einsetzbar. Beispielsweise wird ein optischer Isolator vor dem Laser nur für die Unterdrückung von Selfmixing nicht aber für die Unterdrückung von Etalons auf dem Detektor sorgen. Die meisten der zitierten Lösungsvorschläge zielen darauf, die Interferenzen auf dem gemittelten Messsignals des Detektors zu reduzieren.

Ausgehend von dem vorstehend beschriebenen Stand der Technik liegt der Erfindung die Aufgabe zugrunde, eine Möglichkeit vorzuschlagen, mit der der Einfluss des Störsignals des Messsignals des Lichtdetektors auf das demodulierte Messsignal deutlich reduziert wird, so dass im Messsignal das Hauptsignal deutlich erkennbar ist und somit die Messempfindlichkeit des optischen Messsystems stark verbessert wird.

Die beanspruchten Gegenstände sind in den unabhängigen Ansprüchen definiert. Vorteilhafte Weiterbildungen sind in den abhängigen Ansprüchen beschrieben.

Der Erfindung liegt der Kerngedanke zugrunde für die Reduktion von Interferenzen die Eigenheit der Wellenlängenmodulations-Spektroskopie (WMS) Methode zu verwenden, um die im Messsignal des Lichtdetektors vorhandenen Interferenzen mithilfe der Anpassung der Abstände im Messsystem auf die Modulationsspanne des Lichtemitters derart anzupassen, dass sich Interferenzen im Messsignal des Lichtdetektors nicht ins demodulierte Signal (z.B. auf das 2f-Signal) übertragen. Durch geschickte Wahl der Abstände im Messsystem können damit prinzipiell alle dominanten Interferenzen im demodulierten Messsignal unterdrückt oder zumindest reduziert werden.

Erfindungsgemäß ist die räumliche Orientierung und/oder der Abstand mindestens einer der optoelektronischen und/oder optomechanischen Komponenten des optischen Messsystems gegenüber einer anderen optoelektronischen und/oder optomechanischen Komponente an die Modulationsspanne $\Delta\lambda$ des modulierten Hauptlichtstrahls der Wellenlänge $\lambda_0$ angepasst und derart ausgebildet, dass eine Fourierkomponente der gewählten Demodulationsfrequenz für die Modulationsspanne $\Delta\lambda$ für alle Phasen minimal oder null ist , wobei eine optische Weglängendifferenz $\Delta S$ für den Hauptlichtstrahl gegenüber dem Streulichtstrahl bei der gewählten Modulationsspanne $\Delta\lambda$ des modulierten Hauptlichtstrahls der Wellenlänge $\lambda_0$ besteht, wobei aus der Weglängendifferenz $\Delta S$ der freie Spektralbereich mit einer Periode A des Messsignals resultiert, die so gewählt ist, dass sich mit Hilfe der gegebenen Modulationsspanne $\Delta\lambda$ des modulierten Hauptlichtstrahls der Wellenlänge $\lambda_0$ der Effekt der Störung auf das Messsignal des demodulierten Signals für alle Phasen aufhebt oder zumindest minimiert ist. Die Periode A ist durch den Abstand der Transmissonsmaxima bestimmt. Sie ergibt sich durch Interferenz des Hauptsignals mit dem Störsignal. Dies bedeutet, dass die entsprechenden Abstände und die Modulationsspanne $\Delta\lambda$ aufeinander angepasst werden. Die Modulationsspanne $\Delta\lambda$ ist definiert als die Peak-to-peak Amplitude des Modulationssignals, das eine beliebige Modulationsform haben kann. Davon sind beliebige optische und/oder optomechanische Komponenten betroffen, an denen Reflexionen bzw. Streuungen unter Bildung von Streulichtstrahlen auftreten können, die sich in Richtung des Lichtemitters und/oder des Lichtdetektors ausbreiten und auf diesen gerichtet sind. Der mindestens eine Streulichtstrahl wird als Teil des nicht interferierten oder des interferierten Hauptlichtstrahls angesehen. Somit beginnen sowohl der Hauptlichtstrahl wie auch die auftretenden Streulichtstrahlen in der Apertur des Lichtemitters, da die Streulichtstrahlen bei der anteiligen Reflexion/Streuung des Hauptlichtstrahls aus diesem abgespalten werden.

Die Erfindung bezieht sich vorzugsweise auf ein optisches Messsystem, mit einer Laserdiode als Lichtemitter, einer Photodiode als Lichtdetektor, die optoelektronische Komponenten des Messsystems bilden, und mit mindestens einem zwischen dem Lichtemitter und dem Lichtdetektor angeordneten Gehäusefenster, und mit Mitteln zur Ansteuerung des Lichtemitters und zur Signalverarbeitung des Messsignals des Lichtdetektors. Der Lichtemitter, der Lichtdetektor und das mindestens eine Gehäusefenster zum Durchtritt des Hauptlichtstrahls bilden optoelektronische und/oder optomechanische Komponenten des Messsystems, wobei der Lichtemitter und der Lichtdetektor in einem gemeinsamen Gehäuse mit einem Gehäusefenster oder in getrennten Gehäusen mit je einem lichtdurchlässigen Gehäusefenster angeordnet sind. Das Messsystem kann neben dem Lichtemitter, Lichtdetektor und mindestens einem Gehäusefenster auch weitere optoelektronische, optomechanische und/oder mechanische Komponenten bzw. Elemente aufweisen, die innerhalb oder außerhalb des mindestens einen Gehäuses des optischen Messsystems angeordnet sind. Dabei kann es sich beispielsweise um Spiegel zur Faltung des Strahlengangs handeln oder um eine mit Fenstern versehene Gaszelle, in der die zu untersuchende Gassubstanz eingebracht wird. Dabei emittiert der Lichtemitter einen modulierten Hauptlichtstrahl mit der mittleren Wellenlänge $\lambda_0$ mit einer Modulationsspanne $\Delta\lambda$. Typischerweise wird der Lichtemitter mit einer mittleren Wellenlänge $\lambda_0$ mit der definierten Modulationsspanne $\Delta\lambda$ mit der Frequenz f Wellenlängen moduliert und es erfolgt eine Demodulation des vom Lichtdetektor empfangenen Signals. Die Modulation kann mit einer beliebigen Wellenform, beispielsweise auch mittels einer Dreieck-förmigen oder Cosinus-förmigen Wellenform erfolgen. In der Praxis wird der Lichtemitter bevorzugt mit punktsymmetrischer Wellenform moduliert, wobei die Modulationsform ungerade Fourierkomponenten (1f, 3f, 5f, usw.) enthält. Charakteristisch wird die Fourier-Komponente des Messsignals, d.h. des Messsignals zur zwei-, vier- und/oder m-fachen Modulationsfrequenz ermittelt, so dass m=2, 4, 6, .... ist, womit der Anteil der Amplituden-Modulation im Messsignal unterdrückt werden soll. **In** der praktischen Anwendung bestimmt man dazu üblicherweise die Fourier-Komponente der zweifachen Modulationsfrequenz oder zu einem geradzahlig ganzzahligen Vielfachen m der Modulationsfrequenz. Wird die Fourier-Komponente zur zweifachen Frequenz gemessen, ergibt sich das so genannte 2f-Signal, bei der vierfachen Frequenz das 4f-Signal, usw..

Entsprechend dem Kerngedanken der Erfindung wird erfindungsgemäß die gegenseitige Position bzw. Ausrichtung der optoelektronischen und/oder optomechanischen Komponenten im Strahlengang, an denen unerwünschte Reflexionen oder Streuungen auftreten können, im Hinblick auf die Lage des Lichtemitters wie auch zum Lichtdetektor des optischen Messsystems derart optimiert, dass die auftretenden Interferenzen minimale Auswirkungen auf das Messsignal haben. Insbesondere wird dabei der Abstand des Gehäusefensters zu dem Lichtemitter und vorzugsweise auch zu dem Lichtdetektor so gewählt, dass der Einfluss der genannten Effekte minimal ist. Zudem können auch die Abstände weiterer optoelektronischer und/oder optomechanischer Komponenten zueinander bzw. zu dem Lichtemitter und/oder dem Lichtdetektor derart gewählt sein, dass die von ihnen verursachten Störungen eine minimale Auswirkung auf das von dem Lichtdetektor abgegebene und demodulierte Messsignal haben.

Prinzipiell gibt es zwei voneinander unabhängige Möglichkeiten, um die genannten Störungen durch Optimierung der Position der optoelektronischen und/oder optomechanischen Elemente im Strahlengang zu reduzieren. Zum einen kann durch geeignete Wahl eines möglichst großen Abstandes zwischen einer optoelektronischen und/oder optomechanischen Komponenten des optischen Messsystems und der Apertur des Lichtemitters, die zurückgelegt optische Weglänge des Streulichtstrahls derart vergrößert werden, dass die in die Apertur des Lichtemitters rückgekoppelte Leistung (Self-Mixing) abgeschwächt wird, insbesondere für den Fall, dass die Reflexion oder Streuung diffusen Charakter aufweist. Dabei führt insbesondere die Vergrößerung der optischen Weglänge zu einem verminderten Störsignalanteil des Messsignals. Falls die Ursache für die reflektierten Streulichtstrahlen in punktförmigen Streukörpern (Staub, Kratzer, usw.) liegt, entsteht typischerweise eine solche diffuse Charakteristik des Streulichtes, bei der die Leistung typischerweise proportional zu $(1/I)^2$ ($I$ = Entfernung) abnimmt. Somit kann beispielsweise eine Vergrößerung des Abstandes zwischen der Apertur des Lichtemitters und den dazu entfernt liegenden optoelektronischen bzw. optomechanischen Komponenten wie Fenster, Linsen, Spiegel oder dgl. die Größe des Störsignals im Hinblick auf den Anteil des Hauptsignals im Messsignal abschwächen. Das gleiche gilt auch für mechanische und/oder optomechanische Komponenten wie Blenden, Gehäuseinnenteile usw., welche von dem Hauptlichtstrahl berührt oder getroffen werden.

Zum anderen kann neben den diffusen Streuungen, auch eine Streuung mit nicht diffusem Charakter des Streulichtes durch einen geeignet gewählten besonders definierten Abstand zwischen den optoelektronischen und/oder optomechanischen und/oder mechanischen Komponenten des erfindungsgemäßen optischen Messsystems erreicht werden, dass der Einfluss des Störsignals auf das von dem Lichtdetektor abgegebene, beispielsweise durch Self-Mixing oder Etalons gestörte Messsignal beim Auftreffen auf den Lichtdetektor reduziert ist. Das Störsignal des Messsignals setzt sich in der Regel aus einer Anzahl von Störsignalkomponenten zusammen, die von Reflexionen bzw. Streuungen an den verschiedenen optoelektronischen und/oder optomechanischen und/oder mechanischen Komponenten des optischen Messsystems verursacht werden, wobei die jeweiligen Streulichtstrahlen ein Streulichtstrahlbündel bilden, das sich in Richtung des Lichtemitters bzw. des Lichtdetektors erstreckt. Durch Abstimmen dieser Abstände der jeweiligen Komponenten aufeinander kann erreicht werden, dass die jeweilige betrachtete Fourier-Komponente des entsprechenden Störsignals des Streulichtstrahlbündels reduziert, d.h. die Fourier-Komponente der gewählten Demodulationsfrequenz für die gewählte Modulationsspanne Δλ verschwindet, oder zumindest stark minimiert wird.

Häufig ist das Gehäusefenster des mindestens einen Gehäuses des optischen Messsystems, in dem der Lichtemitter und/oder der Lichtdetektor angeordnet sind, die Hauptursache für Streulichtstrahlen des Hauptlichtstrahls, die mit dem Hauptlichtstrahl zu einem interferierten Hauptlichtstrahl interferieren und so zu einem Messsignal führen, das einen Störsignalanteil und einen Hauptsignalanteil umfasst, wobei das Störsignal mit dem Hauptsignal gekoppelt ist. Dies gilt unabhängig davon, ob der Lichtemitter und der Lichtdetektor in getrennten Gehäusen oder in voneinander beabstandeten Gehäuseabschnitten eines gemeinsamen Gehäuses angeordnet sind, sowohl für den Lichtemitter als auch für den Lichtdetektor. Demzufolge wird erfindungsgemäß vorzugsweise der Abstand zwischen dem Lichtemitter, dem mindestens einen Gehäusefenster und/oder dem Lichtdetektor bzw. zwischen dem Lichtdetektor, dem mindestens einen Gehäusefenster und dem Lichtemitter und damit optische Weglänge für den Hauptlichtstrahl und/oder den mindestens einen Streulichtstrahl derart gewählt, dass die Periode A des durch diese Komponenten verursachten Störsignals im Messsignal die vorstehend angegebenen Bedingungen erfüllt.

Wie bereits erwähnt, umfasst das erfindungsgemäße optische Messsystem zur Gasdetektion einen Lichtemitter, einen Lichtdetektor sowie mindestens ein Gehäusefenster. Die optimalen Abstände zwischen jeweils zwei dieser optoelektronischen und/oder optomechanischen Komponenten des optischen Messsystems, vorzugsweise zwischen dem Lichtemitter und dem mindestens einem Gehäusefenster und/oder dem Lichtdetektor kann bei jeder gewählten Wellenform mit der der Hauptlichtstrahl moduliert wird, empirisch ermittelt oder berechnet werden.

Bei der empirischen Ermittlung von günstigen Abständen wird der Abstand zwischen jeweils zwei der optoelektronischen bzw. optomechanischen Komponenten des optischen Messsystems in kleinen Schritten verändert und das von dem Lichtdetektor ausgegebene Messsignal demoduliert, wobei beispielsweise eine Fourier-Komponente des Messsignals zur zweifachen Modulationsfrequenz ermittelt wird. Dabei können Abstände festgestellt werden, bei denen die Fourier-1 Komponente der gewählten Demodulationsfrequenz verschwindet oder zumindest stark minimiert ist. An solchen Stellen beinhaltet das demodulierte Messsignal im Wesentlichen das Hauptsignal, indem die Auswirkungen des Störsignals auf das Hauptsignal weitgehend eliminiert sind.

Bei der Berechnung von günstigen Abständen L zwischen jeweils zwei der optischen bzw. optomechanischen Komponenten des optischen Messsystems, wie beispielsweise dem Lichtemitter und dem Gehäusefenster oder dem Lichtdetektor und dem Gehäusefenster, kann davon ausgegangen werden, dass diese Komponenten miteinander ein "Fabry Perot Etalon" mit geringer Finesse bilden. Für die Berechnung der optischen Weglängendifferenz ∆S ist zwischen den Phänomenen Self-Mixing und Etalons zu unterscheiden. Nachfolgend wird bei der Berechnung mit S1 die optische Weglänge von dem Lichtemitter zu einem Reflektor und die optische Weglänge von dem Reflektor zum Lichtdetektor bezeichnet. Dies bezieht sich auf eine symmetrische Anordnung, bei der die optische Weglänge von dem Lichtemitter zum Lichtdetektor folglich 2*S1 beträgt, an Hand der die Erfindung beschrieben wird. Es ist offensichtlich, dass bei einer unsymmetrischen Anordnung, d.h. bei einem unterschiedlichen Abstand des Emitters und des Detektors gegenüber dem Reflektor, sich die unterschiedlichen optischen Weglängen addieren. Für die Beschreibung der Erfindung wird im nachfolgenden von einem nicht interferierten Hauptlichtstrahl, einem interferierten Hauptlichtstrahl und einem Streulichtstrahl ausgegangen, wobei der Hauptlichtstrahl je nach Konfiguration die Weglänge S1 und der Streulichtstrahl Teilweglängen S1', S1", S1‴ usw. zurücklegt.

In der weiteren Beschreibung werden die Phänomene "Self-Mixing" und "Etalons" zum einfacheren Verständnis getrennt voneinander beschrieben, obwohl sie gleichzeitig auftreten können. Die nachfolgenden Formeln bilden jeweils nur das eine oder das andere Phänomene ab.

Im Falle von Etalons legen ausgehend von der Apertur des Lichtemitters der Hauptlichtstrahl und der Streulichtstrahl unterschiedliche optische Wege zurück, bis die auf dem Detektor zu dem interferierten Hauptlichtstrahl interferieren. Eine optische Weglängendifferenz des Hauptlichtstrahls gegenüber dem mindestens einen interferierenden Streulichtstrahl ergibt sich somit als $\Delta S = |S_{Streu} - S_{Haupt}|$. Im Falle, dass ein Teil des Hauptlichtstrahles an der Photodiodenoberfläche des Lichtdetektors reflektiert wird und dann vom im Abstand L befindlichen Gehäusefensters des Lichtdetektors wieder auf den Detektor gelangt, ist die optische Weglängendifferenz, $\Delta S = |S_{Streu} - S_{Haupt}|$ gleich dem doppelten Abstand zwischen der Photodiode und der Gehäusefenster des Lichtdetektors. Somit ergibt sich $\Delta S = |S_{Streu} - S_{Haupt}| = |(2*S1 + 2*S1') - 2*S1| = 2*S1' = 2L$ als Weglängendifferenz, wobei 2*S1 den Abstand zwischen der Apertur des Lichtemitters und der Detektoroberfläche darstellt und S1' den Abstand L des Gehäusefensters des Lichtdetektors zum Lichtdetektor entspricht.

Im Falle von Self-Mixing findet die Interferenz zwischen dem in die Apertur des Lichtemitters rückgekoppelten Streulichtstrahl und dem nicht interferierten Hauptlichtstrahl innerhalb des Lichtemitters, beispielsweise Lasers statt, sodass der jeweilige interferierte Hauptlichtstrahl aus der Apertur des Lichtemitters austritt. Da sich im Falle von Self-Mixing der nicht interferierte Hauptlichtstrahl vollständig innerhalb des Lichtemitters befindet, ist für Self-Mixing $S_{Haupt} = 0$ zu setzen und es ergibt sich für die optische Weglängendifferenz $\Delta S = |S_{Streu} - S_{Haupt}| = |S_{Streu} - 0| = S_{streu}$, welche sich nur durch den Weg des Streulichtstrahls ausserhalb der Apertur des Lichtemitters ergibt. **Im** Falle, dass das Licht direkt vom Gehäusefenster des Lichtemitters zurückgestreut wird, ist der zurückgelegte optische Weg des Streulichtstrahls $S_{Streu} = 2L$, also der doppelte Abstand zwischen der Apertur des Lichtemitters und Auftreffpunkt des Hauptlichtstrahls auf das Gehäusefenster und somit $\Delta S = S_{Streu} = 2L$. Wird das Licht indirekt in die Apertur des Lichtemitters zurückreflektiert, z.B. über eine Gehäusewand, verlängert sich der Weg des Streulichtstrahls dementsprechend.

Das Transmissionsspektrum einer solchen Anordnung zeigt bei "Fringes" schmale Transmissionsmaxima für Wellenlängen, welche die Resonanzbedingung erfüllen, während andere Spektralbereiche in der Transmission nahezu vollständig ausgelöscht werden. Dies geschieht durch konstruktive bzw. destruktive Interferenz der im Resonator bzw. Detektor verlaufenden Lichtstrahlen. Dazu ist anzumerken, dass es keine "wirklichen" Fabry-Perot Etalons in dem erfindungsgemäßen optischen Messsystem gibt, da im Design dafür gesorgt wird, dass möglichst keine parallelen Flächen auftreten. Jedoch kann ein Fringe auch durch Streulichtstrahlen hervorgerufen werden. Die aus dem Fabry Perot Etalon bekannten für parallele Resonatorflächen geltenden Gesetzmäßigkeiten können sinngemäß auf geneigte Resonatorflächen übertragen und somit auch bei dem erfindungsgemäßen optischen Messsystem angewendet werden.

Der Abstand der Transmissionsmaxima zueinander wird freier Spektralbereich des Resonators (FSR) genannt und mit A bezeichnet. Dieser freie Spektralbereich A ist abhängig von der optischen Weglängendifferenz ∆S, zwischen dem Hauptlichtstrahl und dem mindestens einen Streulichtstrahl auf dem Lichtdetektor. Bekannterweise wird der freie Spektralbereich A wie folgt berechnet:

$$\Lambda = \frac{\lambda_0^2}{\Delta S},$$

wobei $\lambda_0$ die mittlere Wellenlänge des modulierten Hauptlichtstrahls ist.

Für die Amplitude A des von der optischen Weglängendifferenz abhängigen Interferenzsignals des Lichtdetektors des erfindungsgemäßen optischen Messsystems gilt generell die folgende allgemeine Beziehung.

$$A_{detector} = A_{fringe} \cos\left(\frac{2\pi}{\Lambda} \lambda + \psi_{fringe}\right) \quad .$$

Dieser liegt eine Maximalamplitude $A_{fringe}$ und eine Phase $\psi_{fringe}$ zugrunde.

Die Modulation des Lichtemitters kann mit der Formel

$$\lambda = \lambda_0 + \frac{\Delta\lambda}{2} \cdot \text{waveform}\,(2\pi ft) \quad .$$

beschrieben werden, wobei waveform die Modulationsform und f die Modulationsfrequenz für den Hauptlichtstrahl ist. Damit ergibt sich die Amplitude A des AC-Anteils des betrachteten demodulierten Messsignals des Lichtdetektors als

$$A_{detector}(t, \lambda_0, \Delta\lambda) = A_{fringe} \cos\left(\frac{2\pi}{\Lambda} \frac{\Delta\lambda}{2} \cdot \text{waveform}\,(2\pi ft) + \psi'_{fringe}\right),$$

wobei für die Phase gilt, dass

$$\psi'_{fringe} = \psi_{fringe} + \frac{2\pi\Delta S}{\lambda_0}.$$

Die Amplitude A eines beispielhaften Lock-in-Referenzsignals für das betrachtete 2f-Signal ergibt sich gemäß der Formel

$$A_{lockin,2f}(t) = A_{lockin} \cos(4\pi ft) \quad .$$

Verallgemeinert und damit für alle mf-Signale, d.h. für 2f-, 4f-, 6f-Signale usw. gültig, lautet die Formel

$$A_{lockin,mf}(t) = A_{lockin} \cos(2\pi mft) \quad .$$

Der verwendete Lock-in-Verstärker multipliziert das Lichtdetektorsignal $A_{detector}(t, \lambda_0, \Delta\lambda)$ mit dem Refenzsignal $A_{lockin,2m}(t)$ und integriert danach eine Anzahl von N Perioden, wobei die Messzeit pro Periode umgekehrt proportional zu der Modulationsfrequenz f ist. Dabei ergibt sich für ein mf-Signal die Abhängigkeit der Amplitude A

$$A_{mf}(\lambda_0) = \frac{f}{N} \int_0^{t=\frac{N}{f}} A_{detector}(t, \lambda_0, \Delta\lambda) \cdot A_{lockin,mf}(t)dt \quad .$$

Die optische Weglängendifferenz $\Delta S$ wird nun so gewählt, dass für ein Modulationssignal mit gegebener Wellenform und Modulationsspanne $\Delta\lambda$ die obige Formel für alle möglichen Phasen $\psi'_{fringe}$ $A_{mf}$ minimiert bzw. zu $A_{mt} = 0$ wird.

Die Berechnung ist analytisch je nach Wellenform sehr aufwändig jedoch numerisch sehr einfach zu bewerkstelligen. Die vorstehenden Formeln gelten für alle Phasen und sind somit unabhängig von der Einstellung der Phase, d.h. einer Phasenbeziehung zwischen dem Hauptlichtstrahl und dem mindestens einen Streulichtstrahl.

Es ergibt sich, dass die Fourier-Komponente des demodulierten Messsignals der Ordnung 2f, 4f, 6f, usw. einen vom Abstand L der jeweiligen optischen bzw. optomechanischen Komponenten abhängigen Verlauf aufweist, wobei die Amplitude des Störsignals im demodulierten Messsignal in bestimmten Abständen bedingt durch genau definierte optische Weglängendifferenzen $\Delta S$ des Hauptlichtstrahls und des mindestens einen Streulichtstrahls zu Null wird. Wenn die optische Weglängendifferenz $\Delta S$ des Hauptlichtstrahls und des mindestens einen Streulichtstrahls nicht optimal ist, ergibt sich ein phasenabhängiges demoduliertes Messsignal.

Bei optimiertem Abstand L ist das demodulierte Messsignal des Lichtdetektors phasenunabhängig. Somit haben beispielsweise temperaturinduzierte Phasenänderungen keine oder nur eine stark reduzierte Auswirkung auf das demodulierte Messsignal.

Eine abstandsabhängige Intensitätskurve weist aneinander anschließende höckerförmige Intensitätsbereiche auf, die ein Hauptmaximum mit einem höchsten Amplituden-Peak und eine Anzahl von Zwischenmaxima mit jeweils reduzierten Amplituden-Peaks umfassen. Die Lage des Hauptmaximums zu den Zwischenmaxima ist abhängig von der Ordnung des verwendeten demodulierten mf-Messsignals. Bei einem 2f-Signal beginnt das Hauptmaximum als erster Bereich am Nullpunkt des Koordinatensystems, wobei die Zwischenmaxima rechts an das Hauptmaximum anschließen. Bei einem 4f-Signal liegt zusätzlich ein Zwischenmaximum zwischen dem Nullpunkt und dem Hauptmaximum und bei einem 6f-Signal zwei Zwischenmaxima links des Hauptmaximums und so fort. Die Position des Hauptmaximums ergibt sich gemäß der Ordnung m/2 des verwendeten demodulierten Messsignals. Bei einem 2f-Signal bildet das Hauptmaximum den ersten, bei einem 4f-Signal den zweiten, bei einem 6f-Siganal den dritten Höcker der Intensitätskurve, usw. Die Breite der Zwischenmaxima $\Delta X$ wird bestimmt durch die mittlere Wellenlänge $\lambda_0$ und die Modulationsspanne $\Delta\lambda$. Dadurch ergibt sich die Breite des Hauptmaximums zu $2*\Delta X$. Der Abstand L wird nun so gewählt, dass die optische Weglängendifferenz $\Delta S$ des Hauptlichtstrahls zu dem mindestens einen Streulichtstrahl proportional zu der Breite $\Delta X$ ist, d.h. ein Vielfaches davon ist. Die Minima - Nullstellen - einer solchen Intensitätskurve weisen, ausgenommen der beiden das Hauptmaximum begrenzenden Nullstellen, einen Abstand von $\Delta X$ zueinander auf.

Vorzugsweise wird bereits eine deutliche Reduzierung der Auswirkung des Störsignals auf das Hauptsignal im Messsignal erreicht, wenn die optische Weglängendifferenz $\Delta S$ durch geeignete Wahl des Abstandes L zwischen den optoelektronischen und/oder optomechanischen Komponenten größer ist als $0,5*\Delta X*(m+1)$, mit m=2, 4, 6, ..., entsprechend der Ordnung 2f, 4f, 6f,... des verwendeten Messsignals.

Generell gilt für den optimalen optischen Abstand L der optoelektronischen und/oder optomechanischen Komponenten zueinander, bei dem eine Aufhebung der Auswirkung des Störsignals erfolgt, bei einer Ordnung m des verwendeten demodulierten Messsignals für die optische Weglängendifferenz $\Delta S$ die Beziehung $\Delta S = n*\Delta X$, mit n=1, 2, 3, ...., und mit $n \neq m/2$, wobei n eine natürliche ganze Zahl größer Null ist, mit m = 2, 4, 6, ..., entsprechend der Ordnung 2f, 4f, 6f,... des verwendeten Messsignals. Die Einschränkung auf $n \neq m/2$ schließt aus, dass im Hinblick auf ein 2f-Signal n nicht 1, bei einem 4f-Signal nicht 2, bei einem 6f-Signal nicht 3, usw., sein darf. Damit wird der Intensitätsbereich mit dem höchsten Amplituden-Peak, d.h. das Hauptmaximum ausgeschlossen, das eine doppelte Breite gegenüber den angrenzenden Zwischenmaxima besitzt. Damit wird $\Delta X$ als der kleinste Abstand der Minima der Intensitätskurve festgelegt. Dies ist darin begründet, dass wenn n=m/2 zulässt, der ungünstigste Fall eintritt, d.h. das Störsignal wird in diesem Fall maximal. Im Falle einer Auswertung des 2f-Signals tritt dieser Fall für n=1 (m=2) ein und somit für $\Delta S=\Delta X$. Aus diesem Grunde sollte daher dann $\Delta S>\Delta X$ gewählt werden, da das Störsignal zwischen $\Delta S=\Delta X$ und $\Delta S=2*\Delta X$ stark abnimmt.

Obige Ausführungen betreffen den optimalen Abgleich des Abstandes L für das Aufheben des Störsignals. In der Praxis kann es aber ausreichen, das Störsignal zu minimieren, indem eine Bandbreite um die Nullstellen zugelassen wird. Dies bedeutet, dass bei $\Delta S=n*\Delta X$, n keine ganzzahlige Zahl ist. Die Bedingung mit n=1, 2, 3,.... dient dann lediglich dazu, die Stellen zu finden, an der das Störsignal minimal bzw. zu Null wird.

Bei bevorzugten Ausführungsformen der Erfindung mit beliebiger Modulationsform des Hauptlichtstrahls sind die optoelektronischen und/oder optomechanischen Komponenten relativ zueinander und/oder zu dem Lichtemitter derart angeordnet, dass $\Delta S$ grösser ist als das 0,8-fache oder kleiner als das 1,2-fache von $n*\Delta X$, mit $n \neq m/2$ und mit m = 2, 4, 6,..., entsprechend der Ordnung 2f, 4f, 6f,... des verwendeten Messsignals. Eine ausreichende Minderung des Self-Mixing und der Etalons kann bereits erreicht werden, wenn der Abstand der optoelektronischen und/oder optomechanischen Komponenten derart gewählt wird, dass $\Delta S$ grösser ist als das 0,7-fache oder kleiner als das 1,3-fache von $n*\Delta X$, mit $n \neq m/2$ und mit m = 2, 4, 6,..., entsprechend der Ordnung 2f, 4f, 6f,... des verwendeten Messsignals.

Bei einer Ausführungsform der Erfindung, ist der Hauptlichtstrahl mit einer Dreieck-förmigen Wellenform moduliert. Damit ergibt sich, für eine Minimierung bzw. Aufhebung der Auswirkung des Störsignals auf das Hauptsignal im Messsignal, der geeignete Abstand L der optoelektronischen und/oder optomechanischen Komponenten zueinander dann, wenn $\Delta S = n*\Delta X$, mit $\Delta X = \lambda_0^2/\Delta\lambda$, wobei die Einschränkung gilt, dass $n \neq m/2$.

Die jeweils betrachtete Fourier-Komponente verschwindet beispielsweise bei einer Dreiecksmodulation immer dann, wenn die optische Weglängendifferenz $\Delta S = n*\Delta X = n*\lambda_0^2/\Delta\lambda$ beträgt, wobei n = 1, 2, 3,... eine natürliche ganze Zahl größer Null ist. Dabei ist weiterhin zu beachten, dass $n \neq m/2$ gewählt wird und m = 2, 4, 6,...., entsprechend der Ordnung 2f, 4f, 6f, ... des verwendeten Messsignals.

Bei der Dreiecksmodulationsform und einer Demodulation mit 2f wird vorzugsweise der Abstand L derart gewählt, dass die Periode A des demodulierten Messsignals der halben Modulationsspanne $\Delta\lambda$ des Hauptlichtstrahls entspricht. Hierbei wird in der Formel $\Delta S=n*\lambda^2/\Delta\lambda$ n=2 gewählt. Im Falle von weiter entfernen optischen bzw. optomechanischen Komponenten wird die Periode A so gewählt, dass ein Vielfaches nA der Periode A der Modulationsspanne $\Delta\lambda$ entspricht.

Bei einer Ausführungsform der Erfindung mit einer Dreieck-förmigen Modulation des Hauptlichtstrahls können die optoelektronischen und/oder optomechanischen Komponenten relativ zueinander und/oder zu dem Lichtemitter derart angeordnet werden, dass durch den gewählten Abstand die Periode A kleiner ist als das 0,8 - fache der Modulationsspanne $\Delta\lambda$ oder ein Vielfaches nA der Periode A größer ist als ein 0,8 - faches oder kleiner ist als ein 1,2 - faches der Modulationsspanne $\Delta\lambda$ des Hauptlichtstrahls, mit wie gehabt $n \neq m/2$ und mit m = 2, 4, 6 und so fort. Eine ausreichende Minderung des Self-Mixing und der Etalons kann bereits erreicht werden, wenn der Abstand L der optoelektronischen und/oder optomechanischen Komponenten derart gewählt wird, dass ein Vielfaches nA der Periode A größer ist als ein 0,7 - faches oder kleiner ist als ein 1,3 - faches der Modulationsspanne $\Delta\lambda$, ebenfalls mit $n \neq m/2$ und $m = 2, 4, 6$ usw..

Bei einer Ausführungsform der Erfindung entspricht $\Delta S$ dem doppelten Abstand L zwischen dem Lichtemitter und dem Gehäusefenster ($\Delta S = 2L$), da die dominante Streustrahlung auf direktem Wege zurück zum Lichtemitter gestreut wird und Streuungen via Gehäusewand vernachlässigt werden können (geschwärzte Innenwand des Gehäuses).

Bei einer günstigen Ausführungsform der Erfindung beträgt der Abstand einer Innenseite des Gehäusefensters des Lichtemitters zu dem Lichtemitter und/oder einer Innenseite des Gehäusefensters des Lichtdetektors zu dem Lichtdetektor typischerweise 8 mm, vorzugsweise mindestens 10 mm, weiter bevorzugt mindestens 15 mm. Dieser Mindestabstand stellt sicher, dass eine deutliche Reduzierung der Auswirkung des Störsignals auf das Hauptsignal im Messsignal erreicht wird, da die optische Weglängendifferenz $\Delta S$ deutlich größer als $0,5*\Delta X*(m+1)$ erreicht wird. Der angegebene Abstand bezieht sich auf die Distanz des Gehäusefensters zur Apertur des Lichtemitters (Laserdiode) oder zur Chipoberfläche des Lichtdetektors (Photodiode).

Streuungen des von dem Lichtemitter ausgehenden Hauptlichtstrahls, treten unabhängig von der Dicke des Gehäusefensters immer an den beiden Grenzflächen des Gehäusefensters des Lichtemitters, also innen und außen auf, wobei zwei Störsignale entstehen, die mit dem Hauptsignal in dem Lichtemitter (Laserkavität) interferieren können, was zu einer Modulation der Strahlungsaustrittsleistung führt. Gleiches gilt für Streulichtstrahlen am Gehäusefenster des Detektors, wobei hier der Streulichtstrahl mit dem auf die Detektorfläche auftretenden Hauptlichtstrahl interferiert. Demzufolge ist es sinnvoll, Lichtemitter, Lichtdetektor und die Innenseite des Gehäusefensters derart zueinander zu positionieren, dass die betrachtete Fourier-Komponente des von der Innenseite verursachten Störsignals verschwindet. Damit kann nur noch das von der Außenseite des Gehäusefensters verursachte Störsignal mit dem Hauptsignal interferieren. Um zu erreichen, dass bei der betrachteten Fourier-Komponente auch das entsprechende durch die Außenseite des Gehäusefensters bedingte Störsignal verschwindet, ist es erforderlich, dass der Abstand der Außenseite des Gehäusefensters zu dem Lichtemitter/-detektor den vorstehend aufgeführten Bedingungen bezüglich der Periode A des Störsignals des Messsignals ebenfalls entspricht. Dies kann durch geeignete Wahl der Dicke des Gehäusefensters erreicht werden. Dabei genügt der durch diese Dicke bestimmte Abstand der Außenseite zu der Innenseite des Gehäusefensters ebenfalls den Anforderungen bezüglich der Periode A des verursachten Störsignals des Messsignals. Kann die Verschmutzung der Innenseite des Gehäusefensters ausgeschlossen werden, so kann alternativ das Design nur auf die Aussenseite des Gehäusefensters angepasst werden.

Alle vorstehenden beschriebenen Maßnahmen wirken bei der Modulation des Lichthauptstrahls mittels einer beliebigen Wellenform. Neben der Modulation des Hauptlichtstrahls mittels einer Dreieck-förmigen Wellenform hat sich auch die Modulation des Hauptlichtstrahls mit einer Cosinus-förmigen Wellenform als vorteilhaft erwiesen. Die Modulation mit einer Dreieck-förmigen Wellenform ist jedoch effektiver und damit vorteilhafter als die mit der Cosinus-förmigen Wellenform, wenn Streulichtstrahlen von weiter entfernten optoelektronischen oder optomechanischen Komponenten unterdrückt werden sollen.

Es ist selbstverständlich, dass bei dem erfindungsgemäßen optischen Messsystem zur Messung eines Spektrums auch noch aus dem Stand der Technik bereits bekannte Maßnahmen zur Vermeidung von Streulichtstrahlen oder zur Reduzierung deren Intensität vorgesehen sein können, wie beispielsweise ein gegenüber dem Strahlengang schräg gestelltes Gehäusefenster, Antireflexionsbeschichtungen auf dem Gehäusefenster, keilförmig ausgebildete Fenster, Schwärzungen der Innenseite des Gehäuses, ein optischer Isolator im Strahlengang sowie eine aktive Temperatursenke für den Lichtemitter, und optional eine passive Temperatursenke für das Gehäuse, um die optische Weglänge für den Hauptlichtstrahl und ggf. die auftretenden Streulichtstrahlen möglichst weitgehend temperaturunabhängig zu machen.

Nachfolgend wird die Erfindung anhand eines in der Zeichnung dargestellten Ausführungsbeispiels näher erläutert. Weitere Merkmale der Erfindung ergeben sich aus der folgenden Beschreibung des Ausführungsbeispiels der Erfindung in Verbindung mit den beigefügten Zeichnungen. Es zeigen:

Figur 1    ein erfindungsgemäßes optisches Messsystem mit einem ersten Gehäuse mit geneigtem Gehäusefenster und mit einer darin angeordneten Laserdiode als Lichtemitter sowie mit einem zweiten Gehäuse mit geneigtem Gehäusefenster und mit einer darin angeordneten Photodiode als Lichtdetektor;

Figur 2    die Überlagerung des Messsignals durch Interferenz (Self-Mixing) von Haupt- und Streulichtstrahlen bei drei unterschiedlichen Abständen (Fig. 2a - 2c) zwischen dem Lichtemitter und dem Gehäusefenster bei einer Modulation des Hauptlichtstrahls mittels einer Dreieck-förmigen Wellenform;

Figur 3    die Auswirkungen der Variation des Abstandes zwischen dem Lichtemitter und dem Gehäusefenster gemäß Figur 2 auf das vom Messsignal des Detektors abgeleitete 2f-Signal (Fig. 3a - 3c);

Figur 4    die Amplitude des Störsignals im 2f-Signal mit Bezug auf den die optische Weglängendifferenz bestimmenden Abstand bei einer Modulation des Hauptlichtstrahls mittels einer Dreieck-förmigen Wellenform;

Figur 5    einen Vergleich der Nulldurchgänge des Messsignals für eine Dreiecks-förmige (A) und Cosinus-förmige (B) Wellenform in Abhängigkeit vom Abstand zwischen dem Lichtemitter und dem Gehäusefenster und gleichbleibender Modulationsspanne;

Figur 6    einen Vergleich der Amplitudenabhängigkeit des 2f-Signals vom Abstand zwischen einer optoelektronischen oder optomechanischen Komponente und dem Lichtemitter mittels einer Dreieck-förmigen (A) und einer Cosinus-förmigen (B) Wellenform;

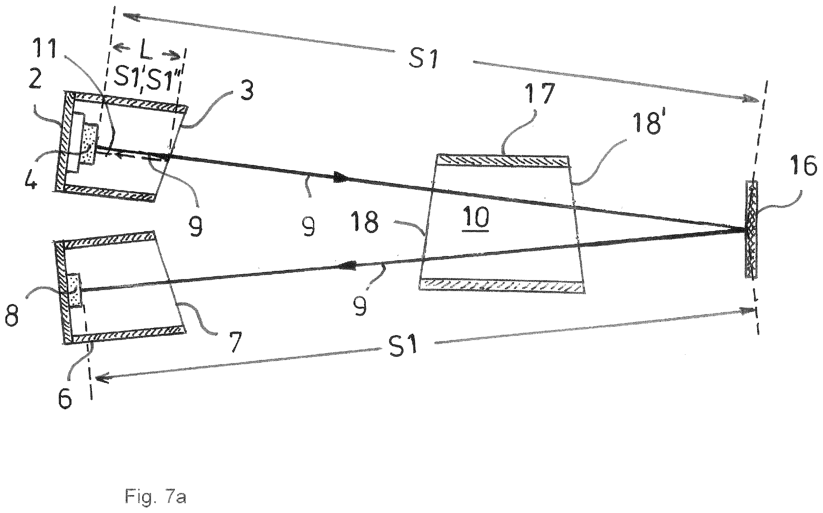

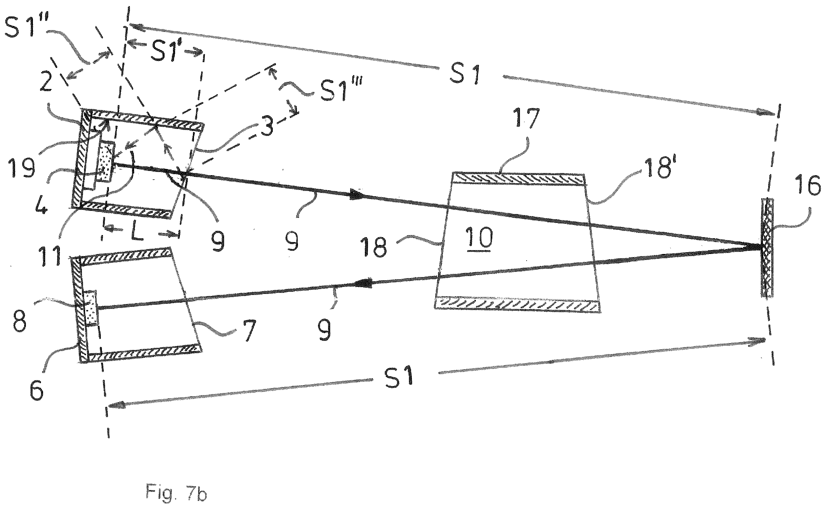

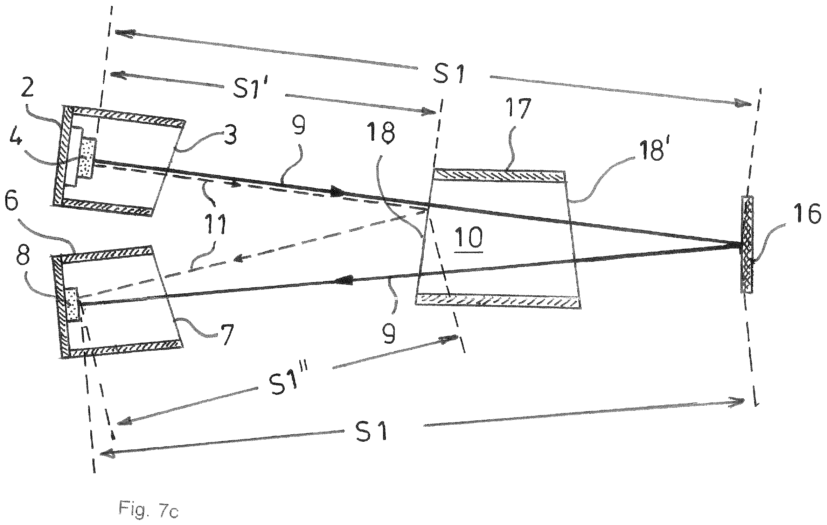

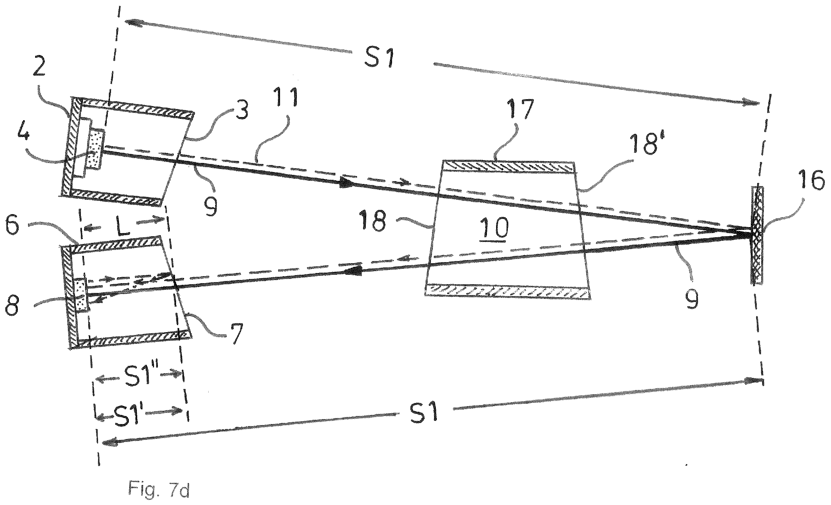

Figur 7    in einer schematischen Prinzipdarstellung den Weg des Streulichtstrahles für direkte Rückstreuung/-reflexion (Fig. 7a) vom Gehäusefenster des Lichtemitters in die Laserapertur (Self-Mixing Effekt) und indirekte Rückstreuung/-reflexion (Self-Mixing) vom Gehäusefenster über eine Gehäusewand in die Laserkavität (Fig. 7b) und den Weg von Hauptlichtstrahl und Streulichtstrahl bei Streuung am Gaszelleneingangsfenster und Interferenz der beiden Lichtstrahlen auf dem Lichtdetektor (Fig. 7c) sowie Rückstreuung von der Apertur der Photodiode zum Gehäusefenster des Lichtdetektors und direkte Rückstreuung zur Photodiode (Fig. 7d) und resultierendem Etalon auf dem Detektor, und

Figur 8    die abstandsabhängige Amplitude des Störsignals bei einem 2f-Signal (Fig. 8a), einem 4f-Signal (Fig. 8b) und bei einem 6f-Signal (Fig. 8c), jeweils bei einer Modulation des Hauptlichtstrahls mittels einer Dreieck-förmigen Wellenform.

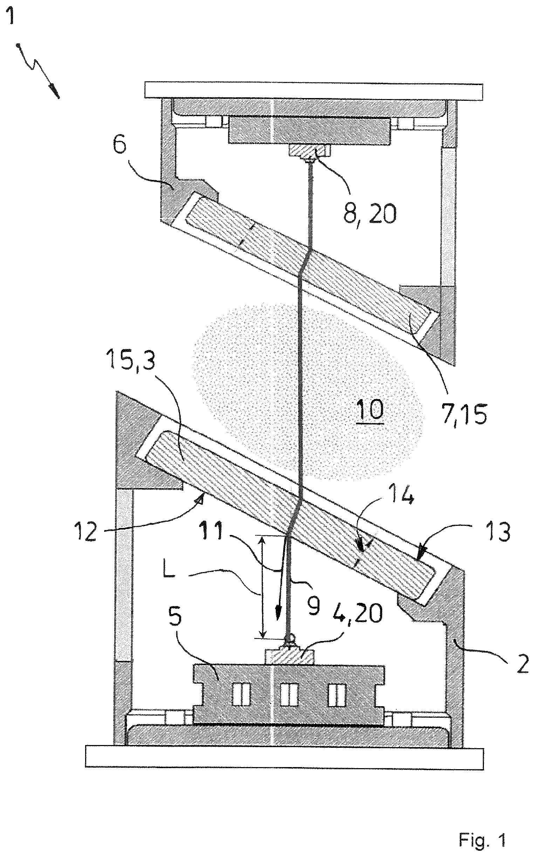

Die Figur 1 zeigt ein erfindungsgemäßes optisches Messsystem 1 zur Messung eines Spektrums bei der Gasdetektion, das ein erstes Gehäuse 2 mit einem geneigten lichtdurchlässigen Gehäusefenster 3 aufweist, in dem eine Laserdiode als Lichtemitter 4 auf einer aktiven Temperatursenke 5 angeordnet ist. Das Messsystem 1 weist außerdem ein von dem Gehäuse 2 getrenntes zweites Gehäuse 6 mit einem geneigten Gehäusefenster 7 auf, in dem ein Lichtdetektor 8 angeordnet ist. Die beiden Gehäuse 2, 6 sind mit Abstand zueinander, einander gegenüberliegend und miteinander fluchtend angeordnet. Der Lichtemitter 4 und der Lichtdetektor 8 bilden die optoelektronischen Komponenten 20 des dargestellten Messsystems 1. Von dem Lichtemitter 4 geht ein Hauptlichtstrahl 9 aus, der auf das Gehäusefenster 3 zentrisch gerichtet ist. Der Hauptlichtstrahl 9 tritt aus dem Gehäuse 2 aus und durchdringt ein zwischen dem Gehäuse 2 mit dem Lichtemitter 4 und dem Gehäuse 6 mit dem Lichtdetektor 8 angeordnetes Gas bzw. Gasgemisch 10, bevor er durch das Gehäusefenster 7 in das Gehäuse 6 mit dem Lichtdetektor 8 eintritt. Das Gehäuse 2 und das Gehäuse 6 sind derart zueinander angeordnet, dass der emittierte Hauptlichtstrahl 9 nach dem Passieren des Gases bzw. Gasgemisches 10 auf den Lichtdetektor 8 fällt. Bei dem in der Figur 1 dargestellten Ausführungsbeispiel wird die dominierende Störung durch Reflektion bzw. Streuung des Hauptlichtstrahls 9 am Gehäusefenster 3 verursacht. Bei dem Lichtemitter 4 handelt es sich vorzugsweise um eine Laserdiode mit einer in Richtung des Gehäusefensters 3 angeordneten Laserapertur. Der Hauptlichtstrahl 9 wird beispielsweise an der Fensterinnenseite 12 des Gehäusefensters 3 anteilig zurückgeworfen, wobei der auftretende Streulichtstrahl 11 in den Lichtemitter 4 einkoppelt und damit dort Self-Mixing verursacht. Prinzipiell gilt das aber für alle reflektierenden oder streuenden Oberflächen und auch für Strahlengänge mit mehreren Reflexionen respektive Streuungen solange die rückgekoppelten Streulichtstrahlen 11 wieder in die aktive Zone des Lichtemitters 4 zurückgelangen.

Die Figuren 7a - 7d veranschaulichen in einer schematischen Prinzipdarstellung die optische Weglänge $S_{Haupt}$ des Hauptlichtstrahls 9 und $S_{Streu}$ des Streulichtstrahls 11, für den Fall, dass zumindest ein in Richtung des Lichtemitters 4 und/oder des Lichtdetektors 8 anteilig aus dem Hauptlichtstrahl 9 rückreflektierter Streulichtstrahl 11 durch Interferenz mit dem Hauptlichtstrahl 9 zu Self-Mixing in dem Lichtemitter 4 und/oder zu Etalons an dem Lichtdetektor 8, d.h. zu einem interferierten Hauptlichtstrahl 9 führt. Der Streulichtstrahl 11 wird dabei direkt oder indirekt, d.h. mindestens einmal umgelenkt auf den Lichtemitter 4 bzw. den Lichtdetektor gerichtet. Zur Verdeutlichung sind in den Figuren die Lichtstrahlen 9, 11 nebeneinander liegend dargestellt, obwohl sie tatsächlich aufeinander liegen. Die Figuren 7a bis 7d zeigen ein Ausführungsbeispiel, bei dem der Lichtdetektor 8 in einem Gehäuse 6 neben dem in einem Gehäuse 2 aufgenommenen Lichtemitter 4 und diesen gegenüberliegend ein Reflektor 16 angeordnet ist. Die Figuren 7a, 7b veranschaulichen die unterschiedliche optische Weglänge des Streulichtstrahls $S_{Streu}$ 11 in dem Gehäuse 2, zwischen dem Lichtemitter 4 und dem Gehäusefenster 3 des Gehäuses 2, der mit dem nicht dargestellten, im Inneren des Lichtemitters (Laserdiode) befindlichen Hauptlichtstrahl interferiert. Alternativ kann auf den Reflektor 16 verzichtet werden, wenn das Gehäuse 6 an der Stelle des Reflektors 16 positioniert wird. Zwischen dem Gehäuse 2 mit dem Gehäusefenster 3 und dem Gehäuse 6 mit dem Gehäusefenster 7 ist eine Gaszelle 17, mit zwei einander gegenüberliegenden Zellenfenstern 18, 18', mit Distanz zu den Gehäusen 2, 6 angeordnet, in der ein zu detektierendes Gas oder Gasgemisch 10 aufgenommen ist. Die Figuren 7c und 7d veranschaulichen die unterschiedliche optische Weglänge $S_{Haupt}$ des Hauptlichtstrahls 9 und $S_{Streu}$ des Streulichtstrahls 11 bis zu dem in dem Gehäuse 6 aufgenommenen Lichtdetektor 8.

Figur 7a zeigt den Lichtemitter 4, angeordnet mit einem Abstand L zu dem Gehäusefenster 3 des Gehäuses 2. Der von dem Lichtemitter 4 ausgehende interferierte Hauptlichtstrahl 9 gelangt über die optische Weglänge 2*S1 zu dem Lichtdetektor 8. Der vom Lichtemitter 4 emittierte Hauptlichtstrahl 9 wird zuvor unter Bildung eines Streulichtstrahls 11 anteilig innen an dem Gehäusefenster 3 des Gehäuses 2 in Richtung des Lichtemitters 4 rückreflektiert. Der Streulichtstrahl 11 legt von dem Lichtemitter 4 bis zum dem Gehäusefenster 3 die optische Weglänge S1' und vom dem Gehäusefenster 3 zurück zu dem Lichtemitter 4 die optische Weglänge S1" zurück. Die optischen Weglängen S1', S1" entsprechen dem Abstand L zwischen dem Gehäusefenster 3 und dem Lichtemitter 4. Damit ergibt sich ein optischer Weg $S_{Streu}$ von dem Lichtemitter 4 zu dem Gehäusefenster 3 und zurück zum Lichtemitter 4 von $S_{Streu} = S1' + S1" = 2L$. Da sich per Definition der Hauptlichtstrahl 9 bei Self-Mixing vollständig im Lichtemitter (Laser) befindet, ist $S_{Haupt} = 0$ und es ergibt sich $\Delta S = |S_{Streu} - S_{Haupt}| = |S_{Streu} - 0| = 2L$ als Weglängendifferenz.

Im Lichtemitter 4 tritt Self-Mixing als Interferenzerscheinung zwischen dem Hauptlichtstrahl 9 und dem Streustrahl 11 auf, so dass der Lichtdetektor 8 ein Messsignal des interferierten Hauptlichtstrahls 9 detektiert, das einen Hauptsignalanteil und einen Störsignalanteil umfasst. Der Streulichtstrahl 11 rührt von dem am Gehäusefenster 3 rückreflektierten Anteil des vom Lichtemitter 4 emittierten Hauptlichtstrahls 9 her. Zum Einschaltzeitpunkt emittiert der Lichtemitter 4 einen nicht interferierten Hauptlichtstrahl 9, später den bereits mit dem Streulichtstrahl 11 im Inneren des Lichtemitters 4 interferierten Hauptlichtstrahl 9. Der interferierte Hauptlichtstrahl 9 passiert die Gaszelle 17 und wird dann am Reflektor 16 zurück zum Lichtdetektor 8 reflektiert, wobei er zweimal die zwei geneigten Zellenfenster 18, 18' passiert. Das Self-Mixing erfolgt in dem Lichtemitter 4 selbst, sodass sich die optische Weglängendifferenz $\Delta S$ in dem Gehäuse 2 als $\Delta S = |S_{Streu} - S_{Haupt}|$, mit $S_{Haupt} = 0$, als $|S_{Streu}|$ ergibt, da sich der Hauptlichtstrahl 9 nur innerhalb des Lichtemitters 4 erstreckt.

Figur 7b zeigt ebenfalls den Lichtemitter 4 mit Abstand L zu dem Gehäusefenster 3 des Gehäuses 2 angeordnet. Der von dem Lichtemitter 4 emittierte Hauptlichtstrahl 9 wird unter Bildung eines Streulichtstrahls 11 anteilig innen an dem Gehäusefenster 3 des Gehäuses 2 in Richtung einer Gehäuseinnenwand 19 des Gehäuses 2 rückreflektiert. Der Streulichtstrahl 11 wird dann an der Gehäuseinnenwand 19 in Richtung des Lichtemitters 4 durch erneute Streuung umgelenkt. Der Streulichtstrahl 11 legt somit von dem Lichtemitter 4 bis zum dem Gehäusefenster 3 die optische Weglänge S1', und dann von dem Gehäusefenster 3 zu der Gehäuseinnenwand 19 die optische Weglänge S1‴ und von der Gehäuseinnenwand 19 zu dem Lichtemitter 4 die optische Weglänge S1" zurück. Die optischen Wegelängen S1'entspricht dem Abstand L zwischen dem Lichtemitter 4 und dem Gehäusefenster 3. Damit ergibt sich eine optische Weglängendifferenz $\Delta S$ von dem Lichtemitter 4 zu dem Gehäusefenster 3 und zurück zum Lichtemitter 4 von $\Delta S = S1' + S1" + S1‴ > 2L$. Nach der Interferenz tritt aus dem Lichtemitter 4 ein interferierter Hauptlichtstrahl 9 aus, der sich durch Self-Mixing aus dem nicht interferierten Hauptlichtstrahl 9 und den Streulichtstrahl 11 zusammensetzt und über die optische Weglänge 2*S1 zu dem Lichtdetektor 8 gelangt.

Figur 7c zeigt die optische Weglänge $S_{Haupt}$ des Hauptlichtstrahls 9 und die optische Weglänge $S_{Streu}$ für den Streulichtstrahl 11 zwischen dem Lichtemitter 4 und dem Lichtdetektor 8, für den Fall, dass der von dem Lichtemitter 4 ausgehende modulierte Hauptlichtstrahl 9 unter Bildung eines Streulichtstrahls 11 anteilig an dem den Gehäusen 2, 6 zugewandten Zellenfenster 18 der Gaszelle 17 außen in Richtung des Lichtdetektors 8 rückgestreut wird. Der Hauptlichtstrahl 9 legt vom Lichtemitter 4 bis zu dem Lichtdetektor 8 die optische Weglänge $S_{Haupt} = 2*S1$ zurück. Vom Lichtemitter 4 bis zum dem Zellenfenster 18 legt der Streulichtstrahl 11 die optische Weglänge S1' und von dem Zellenfenster 18 zu dem Lichtdetektor 8 die optische Weglänge S1" zurück. S1' und S1" können dabei gleich oder unterschiedlich sein. Die optische Weglängendifferenz $\Delta S$ zwischen der optischen Weglänge $S_{Haupt}$ des Hauptlichtstrahls 9 und der unterschiedlichen optischen Weglänge $S_{Streu}$ des Streulichtstrahls 11 zwischen dem Lichtemitter 4 und den Lichtdetektor 8 ergibt sich somit als $\Delta S = S_{Haupt} - S_{Streu} = 2*S1 - (S1' + S1")$. Damit tritt an dem Lichtdetektor 8 ein Etalon als Interferenzerscheinung zwischen dem Hauptlichtstrahl 9 und dem Streulichtstrahl 11 in Form eines interferierten Hauptlichtstrahls 9 auf, der aus dem nicht interferierten Hauptlichtstrahl 9 und dem Streulichtstrahl 11 besteht, so dass der Lichtdetektor 8 ein Messsignal mit einem Hauptsignalanteil und einem Störsignalanteil umfasst.

Figur 7d zeigt die optische Weglänge $S_{Haupt}$ des Hauptlichtstrahls 9 und die optische Weglänge $S_{Streu}$ für den Streulichtstrahl 11 zwischen dem Lichtemitter 4 und dem Lichtdetektor 8, für den Fall, dass der von dem Lichtemitter 4 ausgehende modulierte Hauptlichtstrahl 9 nicht unter Bildung eines Streulichtstrahls 11 anteilig an dem den Gehäusen 2, 6 zugewandten Zellenfenster 18 außen in Richtung des Lichtdetektors 8 rückgestreut wird, sondern nur von der Apertur des Lichtdetektors 8 (Photodiode) in Richtung des Gehäusefensters 7 des Lichtdetektors 8 anteilig zurückgeworfen wird. Das Gehäusefenster 7 reflektiert bzw. streut den Streulichtstrahl 11 in Richtung der Photodiode 8 zurück. Dabei kommt es zu einer Interferenz zwischen dem Hauptlichtstrahl 9 und dem Streulichtstahl 11 mit Bildung eines aus diesen Strahlen bestehenden interferierten Hauptlichtstrahls 9. Der Hauptlichtstrahl 9 und der Streulichtstrahl 11 legen vom Lichtemitter 4 bis zu dem Lichtdetektor 8 die optische Weglänge $S_{Haupt} = S_{Streu} = 2*S1$ zurück. Der Hauptlichtstrahl 9 wird anteilig an Lichtdetektor 8 in Richtung des Gehäusefensters 7 rückreflektiert. Dabei legt der Streulichtstrahl 11 zusätzlich die optische Weglänge S1' vom Lichtdetektor zum Gehäusefenster 7 und vom Gehäusefenster 7 bis zu dem Lichtdetektor 8 die optische Weglänge S1" zurück. Die optischen Weglängen S1', und S1" entsprechen dem Abstand L zwischen dem Lichtdetektor 8 und dem Gehäusefenster 7. Damit ergibt sich dort eine optische Weglängendifferenz $\Delta S$ zwischen dem Hauptlichtstrahl 9 und dem Streulichtstrahl 11 von $\Delta S = |(2*S1) - (2*S1+ S1'+S1'')| = S1'+S1'' = 2L$, so dass der Lichtdetektor 8 ein Messsignal mit einem Hauptsignal und einem Störsignal umfasst.

Üblicherweise treten bei gattungsgemäßen optischen Messsystemen Streulichtstrahlen 11 und damit Interferenzen mit dem jeweiligen Hauptlichtstrahl 9 gemäß den Figuren 7a bis 7d gemeinsam auf, wobei sich durch die Referenzerscheinungen das Hauptsignal und das Störsignal überlagern und zu einem gestörten Messsignal des Lichtdetektors führen. Durch geeignete Wahl des Abstandes zwischen optisch wirksamen Grenzflächen der jeweiligen optischen und/oder optomechanischen Komponenten des optischen Messsystems kann der Einfluss des Störsignals auf das Messsignal deutlich reduziert werden. Die Figur 1 zeigt eine in den Figuren 7a - 7d nicht abgebildete Variante ähnlich der Figur 7a, bei der das Gehäuse 6 an der Stelle des Reflektors 16 positioniert ist und den Reflektor 16 ersetzt. Auch die Gaszelle 17 ist nicht dargestellt. Dabei wird der Hauptlichtstrahl 9 anteilig unter Bildung eines Streulichtstrahls 11 an dem Gehäusefenster 3 des Gehäuses 2 mit dem Lichtemitter 4 reflektiert, der sich in Richtung des Lichtemitters 4 erstreckt. An dem Gehäusefenster 7 des Gehäuses 6 mit dem Lichtdetektor 8 können entsprechende Streulichtstrahlen entstehen, die jedoch nicht dargestellt sind. Der Hauptlichtstrahl 9 wird an einer Innenseite 12 und an einer Außenseite 13 des Gehäusefensters 3 reflektiert bzw. gestreut. Das Gehäusefenster 3 weist eine Dicke 14 auf, die durch den Abstand der Innenseite 12 zu der Außenseite 13 des Gehäusefensters 3 bestimmt ist. Der Lichtemitter 4, der Lichtdetektor 8 sowie die beiden Gehäusefenster 3, 7 bilden optoelektronische bzw. optomechanische Komponenten 15 des optischen Messsystems 1. Der in Richtung des Lichtemitters 4 aus dem Hauptlichtstrahl 9 reflektierte Streulichtstrahl 11 verursacht durch Self-Mixing mit dem Hauptlichtstrahl (im Laser) ein Messsignal, das ein Störsignal und ein Hauptsignal umfasst. Dabei ist der Lichtemitter 4 mit seiner Apertur in einem definierten Abstand L zu dem Gehäusefenster 3 angeordnet, wobei der Abstand L die optische Weglängendifferenz $\Delta S = 2*L$ verändert und die Amplitude sowie die Periode A des durch das Gehäusefenster 3 verursachten Störsignals im Messsignal beeinflusst.

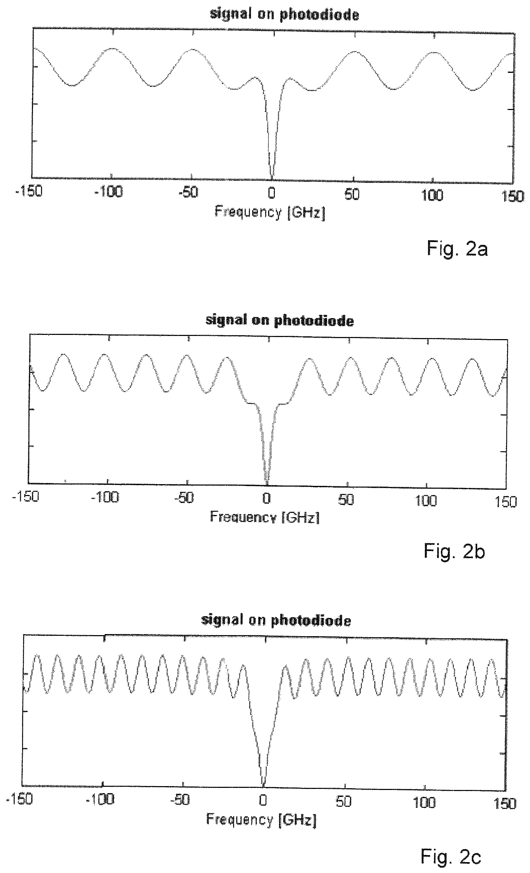

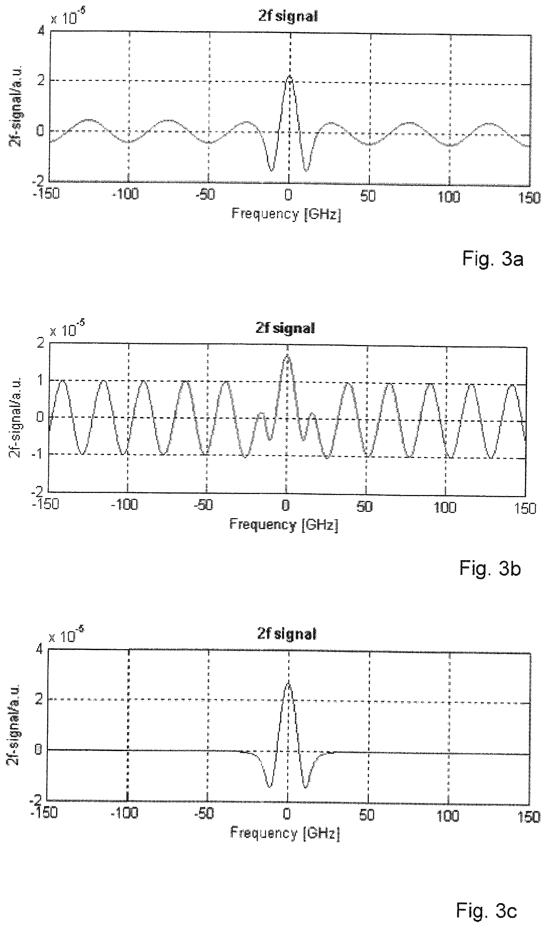

Der Effekt einer Störung auf das Messsignal wird nachfolgend exemplarisch an drei verschiedenen Abständen L zwischen der Apertur des Lichtemitter 4 und der streuenden Fensterinnenseite 12 bezüglich der Figuren 2a - 2c und 3a - 3c diskutiert. Hier wird der in Fig. 7a dargestellte Fall für direkte Rückstreuung betrachtet. Der erste Abstand L = 0,3 cm (Fig. 2a, 3a) entspricht etwa dem Abstand zwischen dem Lichtemitter 4 und Fensterinnenseite 12. Der Abstand L = 0,584 cm (Fig. 2b, 3b) wurde gewählt, um den ungünstigsten Fall aufzuzeigen, d. h. ein Störsignal zu erzeugen, die eine Periode A in der Größenordnung der üblichen Breite einer Gasabsorptionslinie aufweist. Mit L = 1,17 cm (Fig. 2c, 3c) wird der Fall aufgezeigt, bei der keine Störung, d. h. kein Störsignal im demodulierten Messsignal vorzufinden ist. Den Darstellungen liegt eine dreiecksförmige Wellenform mit einer festen Modulationsbreite $\Delta\lambda = 0,195$ nm bei $\lambda_0 = 1,512$ $\mu$m zugrunde.

Die Figuren 2a bis 2c zeigen das simulierte Messsignal des Lichtdetektors 8 für die drei Abstände L, bzw. optische Weglängendifferenzen $\Delta S = 2*L$. Das simulierte Messsignal ist die normierte Leistung des Lichtemitters in einem Bereich von 0,9985 bis 1,000. Die Figuren sollen die verschiedenen Kurvenformen veranschaulichen. Der Peak bei 0 GHz stellt das eigentlich zu messende Signal der Absorption dar, in diesem Fall das Signal eines $NH_3$ Gaspeaks mit Lorentzprofil, das nun von der periodischen Störung überlagert wird. Wie zu ersehen ist, nimmt mit zunehmendem Abstand L, d.h. mit wachsender optischer Weglänge Sstreu für den Streulichtstrahl 11, die Periode A ab. Die Amplitude der Störung ist jedoch für alle drei Varianten die gleiche, da die Reduktion der Rückkopplung mit zunehmendem Abstand L des Gehäusefensters 3 bezüglich dem Lichtemitter 4 in den entsprechenden Figuren nicht berücksichtigt ist.

Die Figuren 3a bis 3c zeigen die Auswirkung auf das von dem Messsignal abgeleitete 2f-Signal, d.h. bei m=2. Diese Abbildungen zeigen die Amplituden der jeweiligen Störungen im 2f-Messsignal gegenüber den drei verschiedenen optischen Weglängen $S_{Streu}$ für den Streulichtstrahl 11, d.h. bei unterschiedlichen Abständen L zwischen der Apertur des Lichtemitters 4 und dem Gehäusefenster 3. Wie zu erkennen ist, nimmt das Störsignal von L = 0,3 cm (Fig. 3a) bis L = 0,584 cm (Fig. 3b) stark zu und fällt dann anschließend wieder stark ab. Die Darstellung mit L = 0,3 cm (Fig. 3a) zeigt insbesondere, dass die Störung auch im 2f-Signal sichtbar ist. Diese Störung limitiert bei dem optischen Messsystem 1 die Messgenauigkeit. Wird nun der Abstand L auf L = 0,584 cm verlängert (Fig. 3b), so verstärkt sich der Effekt und das $NH_3$ Gassignal ist kaum noch von den Interferenzen zu unterscheiden. Eine deutliche Reduktion des Messfehlers kann jedoch erreicht werden, wenn der Abstand L zwischen dem Gehäusefenster 3 und dem Lichtemitter 4 derart gewählt wird, dass für die optischen Weglängendifferenzen $\Delta S$ die Bedingung $\Delta S = 2*\lambda_0^2 / \Delta\lambda = 2*\Delta X$ erfüllt ist. Für den Abstand L mit L = 1,17 cm (Fig. 3c) zeigt das Messsignal nur noch das Signal des $NH_3$ Peaks, d.h. das 2f-Signal ist komplett frei von der Interferenzstörung.

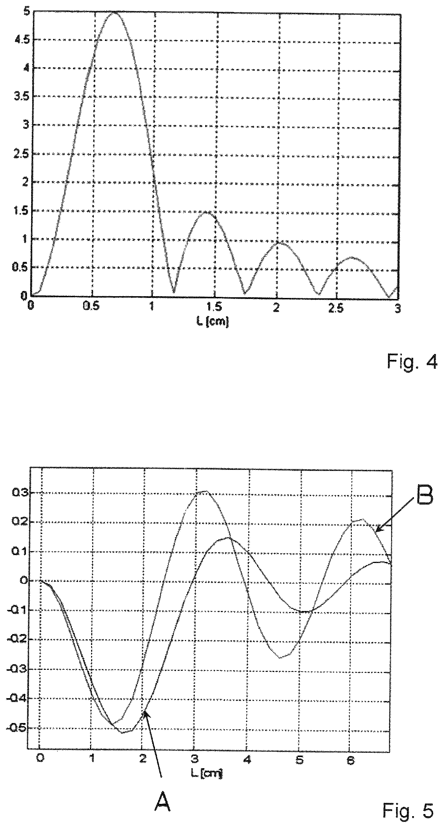

Die Figur 4 zeigt im 2f-Messsignal die Amplitude A des Störsignals als Funktion des Abstandes L für den in Fig. 7a dargestellten Fall für direkte Rückstreuung. Dargestellt ist die Fourier-Komponente des demodulierten Messsignals. Die gezeigte Intensitätskurve weist aneinander anschließende höckerförmige Intensitätsbereiche auf, die ein Hauptmaximum mit einem höchsten Amplituden-Peak und eine Anzahl von Zwischenmaxima mit jeweils reduzierten Amplituden-Peaks umfassen. Deutlich erkennbar sind das große erste Hauptmaximum und die darauf folgenden Nullstellen und kleineren Zwischenmaxima. Dabei beginnt das Hauptmaximum als erster Bereich am Nullpunkt (L=0 cm), wobei die Zwischenmaxima rechts an das Hauptmaximum anschließen. Wie man sieht, nimmt das Störsignal von L = 0 cm bis L = 0,584 cm stark zu und fällt dann anschließend wieder stark ab und erreicht bei L = $\Delta S/2 = \lambda_0^2 / \Delta\lambda = \Delta X$ das erste lokale

Minimum.

Die Figur 5 zeigt einen Vergleich der Abhängigkeit der Nulldurchgänge der Amplitude des demodulierten Messsignals bei gleicher Modulationsspanne $\Delta\lambda$ für eine Dreieck-förmige Wellenform (Kurve A) und eine Cosinus-förmige Wellenform (Kurve B). Die Dreieck-Modulation dämpft den Störsignalanteil des demodulierten Messsignals stärker als die Cosinus-Modulation, erfordert jedoch gegenüber der Cosinus-Modulation geringfügig größere Abstände zwischen dem Lichtemitter 4 und denjenigen optoelektronischen und/oder optomechanischen Komponenten 15, wie beispielsweise das Gehäusefenster 3, die Streulichtstrahlen 11 bewirken können.

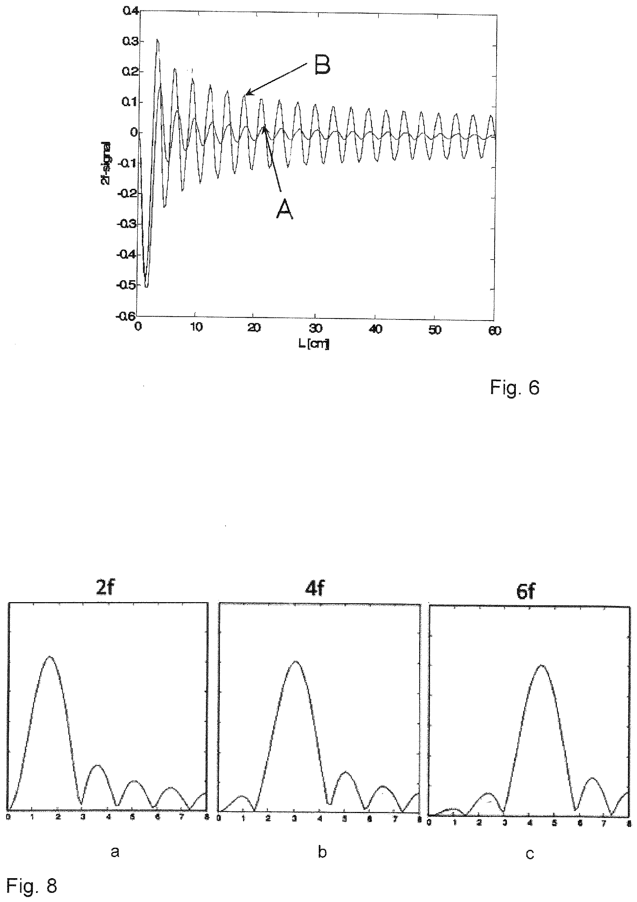

Die Figur 6 zeigt einen Vergleich der Amplitudenabhängigkeit des 2f-Signals vom Abstand L zwischen dem Lichtemitter 4 und einer optomechanischen Komponente 15 bei einer Modulation des Hauptlichtstrahls mittels einer Dreieck-förmigen Wellenform (Kurve A) und einer Cosinus-förmigen Wellenform (Kurve B). Es ist klar sichtbar, dass auch hier die Dreieck-Modulation wirksamer ist als die Cosinus-Modulation. Der Einfluss des Störsignals nimmt bei der Dreieck-Modulation mit zunehmenden Abstand zwischen dem Lichtemitter 4 und denjenigen optoelektronischen und/oder optomechanischen Komponenten 15, die Streulichtstrahlen 11 bewirken können, wie beispielsweise dem Gehäusefenster 3, deutlich schneller in der Intensität ab. Die Figur lässt erkennen, dass bei der Dreieck-förmigen Modulation die optische Störung mit der Entfernung des optomechanischen Elementes wesentlich stärker abnimmt als bei der Cosinusförmigen Modulation. So ist der Einfluss der Störung in der Nähe des Lichtemitters (Laserdiode), z.B. am Gehäusefenster 3 des Lichtemitters 4, das beispielsweise 1.8 cm von der Laserdiode entfernt ist, bei beiden Kurven A und B noch nahezu gleich, bei einer Streuung an Zellenfenster 18 der Gaszelle 17, die beispielsweise 5cm entfernt ist, schon deutlich reduziert. Der Einfluss bei einer Störung am Lichtdetektor 8, der beispielsweise 60 cm vom Lichtemitter 4 entfernt ist, ist der Unterschied erheblich.

Im Allgemeinen sind mehrere solche Rückkopplungen zwischen dem Lichtemitter 4 und einer der anderen optoelektronischen bzw. optomechanischen Komponenten 15 bei dem optischen Messsystem 1 mit unterschiedlichen optischen Weglängen $S_{Streu}$ möglich und meist auch vorhanden. Für jede einzelne optische Weglänge $S_{Streu}$ sollen im Idealfall die vorstehend aufgeführten Bedingungen erfüllt werden. In der Praxis ist das oftmals nicht oder nur bedingt möglich, weil zwischen den verschiedenen optischen Weglängen $S_{Streu}$, $S_{Haupt}$, d.h. die durch die unterschiedlichen Abstände L der entsprechenden Komponenten 15 bedingt sind, im Allgemeinen bestimmte Abhängigkeiten bestehen. Eine praxistaugliche Bedingung für die Positionierung einer optoelektronischen oder mechanischen Komponente 15, welche Streustrahlung verursacht, gegenüber dem Lichtemitter 4, lautet beispielsweise

$$|S_{Streu}-S_{Haupt}| = \Delta S > \lambda_0^2/\Delta\lambda,$$

wobei $\lambda_0$ die mittlere Wellenlänge und $\Delta\lambda$ die Modulationsspanne des modulierten Hauptlichtstrahls 9 in Nanometern bedeutet. Die Erfüllung dieser Bedingung ist vorteilhaft, da das Störsignal zwischen einer optischen Weglängendifferenz $\Delta S$ bzw. $\Delta S' = \lambda_0^2/\Delta\lambda$ und $2*\lambda_0^2/\Delta\lambda$ stark abnimmt. Das Symbol $\Delta S'$ bezeichnet im Falle von mehreren Quellen für Streulichtstrahlen 11, d.h. von mehreren reflektierenden oder rückstreuenden optoelektronischen bzw. optomechanischen Komponenten 15 und/oder von mehreren reflektierenden oder rückstreuenden Flächen einer derartigen Komponente 15, die in unterschiedlichem Abstand L zu dem Lichtemitter 4 angeordnet sind und damit mehrere differierende optische Weglängen Sstreu der Streulichtstrahlen 11 bedingen, die kürzeste optische Weglängendifferenz $\Delta S'$, welche einen relevanten Beitrag zur Interferenz des Hauptlichtstrahls 9 mit dem Streulichtstrahl 11 liefert. Man erkennt zudem dabei, dass die lokalen Maxima der Störung mit zunehmender optischer Weglängendifferenz $\Delta S$, immer kleiner werden. Dieser Effekt wird zudem noch dadurch verstärkt, dass mit zunehmendem Abstand das rückgekoppelte Licht weniger wird (nicht in Figur 4 berücksichtigt).

In der konstruktiven Praxis sind die Toleranzen der gegenseitigen Lagen der optoelektronischen und/oder optomechanischen Komponenten 15, 4, 8 zu berücksichtigen. Prinzipiell besteht bei dem Gehäusefenster 3 das Problem, dass man hier den Abstand L zur Innenseite 12 des Gehäusefensters 3 und zu dessen Aussenseite 13 gleichermaßen optimieren muss, um ein optimales Ergebnis zu erzielen. Hierzu gibt es prinzipiell zwei Lösungsansätze, um trotz der unterschiedlichen optischen Weglänge Sstreu und der daraus resultierenden optischen Weglängendifferenzen $\Delta S$, die durch den ungleichen Abstand L der Innenseite 12 und der Aussenseite 13 zu dem Lichtemitter 4 bedingt sind, die Bedingung zu erfüllen, dass sich beide in einem Minimum der Kurve A(L) befinden. Dies kann entweder durch Anpassen der Dicke 14 des Gehäusefensters 3 und/oder Verkippen des Gehäusefensters 3 bezüglich dem Strahlengang erreicht werden.

Hilfreich ist unter anderem auch das Einfügen eines in den Figuren nicht dargestellten optischen Isolators in den Strahlengang, der dafür sorgt, dass rückgestreutes Licht von nachfolgenden optomechanischen Elementen 15 kein Self-Mixing mehr erzeugen kann. Die erste in Strahlrichtung des Lichtemitters 4 befindliche Grenzfläche des optischen Isolators, beispielsweise eines Lambda-Viertel-Plättchens, bewirkt dabei jedoch immer noch Streustrahlung, die Self-Mixing verursachen kann. Aus diesem Grund ist es auch vorteilhaft, die Lage dieser ersten optischen Grenzfläche nach vorstehend aufgeführten Abstandsregeln zu optimieren. **In** einer konkreten Ausführung kann auf der Innenseite 12 des Gehäusefensters 3 ein Lambda-Viertel-Plättchen angebracht werden, welches rückreflektiertes Licht von der äußeren Seite, beispielsweise von der Aussenseite 13 oder von dem Gehäusefenster 7 des Gehäuses 6 mit dem Lichtdetektor 8 um einen Winkel von 90° dreht, sodass es nicht mit dem Hauptlichtstrahl 9 des Lichtemitters 4 oder möglichen Streulichtstrahlen 11 in dem Gehäuse 2, in dem der Lichtemitter 4 angeordnet ist, interferieren kann. Dabei ist es von Vorteil, den optischen Isolator abstandslos mittels eines Klebers flächig mit der Innenseite 12 zu verbinden, dessen Brechungsindex möglichst genau mit dem des optischen Isolators bzw. des Gehäusefensters 3 übereinstimmt, sodass keine weitere optische Grenzschicht zwischen dem optischen Isolator und dem Gehäusefenster entsteht. Alternativ kann beispielsweise das Lambda-Viertel-Plättchen selbst auch als Gehäusefenster 3 benutzt werden.

In der Figur 8 ist die abstandsabhängige Amplitude des Störsignals bei einem 2f-Signal (Fig. 8a), einem 4f-Signal (Fig. 8b) und bei einem 6f-Signal (Fig. 8c), jeweils bei einer Modulation des Hauptlichtstrahls 9 mittels einer Dreieck-förmigen Wellenform dargestellt. Die Figuren 8a bis c zeigen das Störsignals $A(L)$ als Funktion des Abstandes $L$ bzw. optischen Weglängendifferenz $\Delta S$. Deutlich erkennbar sind das große Hauptmaximum und die daran rechts und/oder rechts anschließenden kleineren Zwischenmaxima mit den dazwischen liegenden Nullstellen. Die Lage des Hauptmaximums zu den Zwischenmaxima ist abhängig von der Ordnung des verwendeten demodulierten mf-Messsignals. Bei einem 2f-Signal (Fig. 8a) beginnt das Hauptmaximum als erster Bereich am Nullpunkt, wobei die Zwischenmaxima rechts an das Hauptmaximum anschließen, bei einem 4f-Signal (Fig.8b) liegt zusätzlich ein Zwischenmaximum zwischen dem Nullpunkt und dem Hauptmaximum, bei einem 6f-Signal (Fig. 8c) zwei Zwischenmaxima links des Hauptmaximums. Die Position des Hauptmaximums ergibt sich gemäß der Ordnung m/2 des verwendeten demodulierten Messsignals. Rechts des Hauptmaximums ist auch beim 4f-und beim 6f-Signal jeweils eine Anzahl von Zwischenmaxima angeordnet.

In der Praxis wird das Laser-Package oft hermetisch dicht verschlossen, sodass die Innenseite des Fensters während der gesamten Lebensdauer nicht verschmutzen sollte. In diesem Fall ist es ausreichend, dafür zu sorgen, dass die Innenseite des Fensters optisch sauber ist, so dass man in diesem Fall Streulichtstrahlen der Innenseite vernachlässigen kann und das Design auf die Aussenseite des Fensters auslegen kann, welche im Gegensatz zur Innenseite sehr anfällig für Verschmutzungen ist.

Eine typische Vorgehensweise beim Optimieren eines wellenlängenmodulierten Messsystems beinhaltet zuerst die Definition des verwendeten Wellenlängenbereiches, angepasst auf das zu messende Spektrum, dann die Definition der Signalverarbeitungsmethode und die Optimierung der verwendeten Modulationsspanne $\Delta\lambda$ bezüglich Rauschens, Querempfindlichkeiten und dergleichen und anschließend die Berechnung der optimalen Positionen aller optoelektronischen und optomechanischen Komponenten 15 des optischen Messsystems 1 für die Messung eines Spektrums. Nachdem die Position der optoelektronischen und optomechanischen Komponenten 15 einmal getroffen wurde, kann optional eine Fein-Optimierung der Modulationsspanne $\Delta\lambda$ durchgeführt werden, um Fertigungstoleranzen auszugleichen.

## Patentansprüche

1. Optisches Messsystem (1) zur Gasdetektion nach der Wellenlängenmodulations-Spektroskopie,

mit einem Lichtemitter (4) und mindestens einem Lichtdetektor (8) als optische Komponenten (20), und mit mindestens einer zwischen dem Lichtemitter (4) und dem mindestens einen Lichtdetektor (8) angeordneten optomechanischen Komponente (15),
wobei die optischen Komponenten und die mindestens eine optomechanische Komponente für Lichtstrahlen optisch wirksame Grenzflächen aufweisen,
wobei der Lichtemitter (4) und der mindestens eine Lichtdetektor (8) gemeinsam in einem Gehäuse (2, 6) oder getrennt in jeweils einem Gehäuse (2, 6) angeordnet sind, und das Gehäuse (2, 6) optional ein Gehäusefenster (3, 7) aufweist, das eine optomechanische Komponente (15) bildet,
wobei der Lichtemitter (4) einen modulierten Hauptlichtstrahl (9) einer mittleren Wellenlänge $\lambda_0$ mit einer Modulationsspanne $\Delta\lambda$ emittiert, und
zumindest ein an mindestens einer optisch wirksamen Grenzfläche mindestens einer optomechanischen Komponente (15) in Richtung des Lichtemitters (4) und/oder des Lichtdetektors (8) anteilig aus dem Hauptlichtstrahl (9) reflektierter/gestreuter Streulichtstrahl (11) durch Interferenz mit dem Hauptlichtstrahl (9) zu Self-Mixing in dem Lichtemitter (4) und/oder zu Etaloneffekten an dem Lichtdetektor (8) führt,
wobei sich durch die Interferenz des Hauptlichtstrahls (9) mit dem Streulichtstrahl (11) ein interferierter Hauptlichtstrahl (9) ergibt, der mit dem Lichtdetektor (8) detektiert wird, und wobei ein aus der Detektion des interferierten Hauptlichtstrahls (9) am Lichtdetektor (8) resultierendes Messsignal entsprechend einen Störsignalanteil und einen Hauptsignalanteil umfasst,
das Messsignal demoduliert wird, und der Störsignalanteil im Messsignal das demodulierte Messsignal beeinflusst,

wobei

die räumliche Orientierung und/oder der Abstand (L) mindestens einer der optisch wirksamen Grenzflächen einer optischen und/oder optomechanischen Komponente (20, 15) zu einer zweiten optisch wirksamen Grenzfläche derselben oder einer weiteren, zweiten optischen und/oder optomechanischen Komponente (20, 15) an die Modulationsspanne $\Delta\lambda$ des modulierten Hauptlichtstrahls (9) der Wellenlänge $\lambda_0$ angepasst ist, dass die Auswirkung des Störsignals auf das Hauptsignal auf eine Fourierkomponente des demodulierten Messsignals für die Modulationsspanne $\Delta\lambda$ für alle Phasen minimal oder null ist, wobei die Abstände derart gewählt sind, dass Amplituden aller dominanten Interferenzen der Fourierkomponente des demodulierten Messsignals unterdrückt oder zumindest reduziert werden,

wobei eine optische Weglängendifferenz $\Delta S$ für den Hauptlichtstrahl (9) gegenüber dem Streulichtstrahl (11) bei der gewählten Modulationsspanne $\Delta\lambda$ des modulierten Hauptlichtstrahls (9) der Wellenlänge $\lambda_0$ besteht, die durch eine unterschiedliche optische Weglänge $S_{Haupt}$ des Hauptlichtstrahls (9) gegenüber einer optischen Weglänge $S_{Streu}$ des Streulichtstrahls (11) definiert ist,

das demodulierte Messsignal, bedingt durch die optische Weglängendifferenz $\Delta S$ des Hauptlichtstrahls (9) gegenüber dem Streulichtstrahl (11) und durch die Interferenz des Störsignals mit dem Hauptsignal, eine Periode A als freien Spektralbereich aufweist, die durch den Abstand der Transmissionsmaxima eines Transmissionsspektrums je zweier optisch wirksamer Grenzflächen einer optomechanischen und/oder optischen Komponente (15), jeweils einer optisch wirksamen Grenzfläche zweier optomechanischer Komponenten (15), jeweils einer optisch wirksamen Grenzfläche zweier optischer Komponenten (20) oder jeweils einer optisch wirksamen Grenzfläche einer optischen Komponente (20) und einer optomechanischen Komponente (15) bestimmt ist, die Modulation des Hauptlichtstrahls (9) mittels einer beliebigen periodischen Wellenform erfolgt, und die Modulationsspanne $\Delta\lambda$ die Peak-to-Peak-Amplitude des zur Modulation des Hauptlichtstrahls (9) der Wellenlänge $\lambda_0$ verwendeten Modulationssignals ist.

2. Optisches Messsystem nach Anspruch 1, **dadurch gekennzeichnet, dass** die optische Weglängendifferenz $\Delta S$ größer ist als $0,5*\Delta X*(m+1)$, mit $m = 2, 4, 6, ...$, entsprechend der Ordnung 2f, 4f, 6f,... des verwendeten Messsignals, wobei $\Delta X$ der Abstand ist, bei der eine Fourier-Komponente des demodulierten Messsignals neben einem höchstem Amplituden-Peak sich wiederholend minimal ist.

3. Optisches Messsystem nach Anspruch 1, **dadurch gekennzeichnet, dass** die optische Weglängendifferenz $\Delta S$ größer ist als ein 0,7 - faches oder kleiner als ein 1,3 - faches von $n*\Delta X$, mit $n=1, 2, 3, ....$, und mit $n \neq m/2$, mit $m = 2, 4, 6, ...$, entsprechend der Ordnung 2f, 4f, 6f,... des verwendeten Messsignals, wobei $\Delta X$ der Abstand ist, bei der eine Fourier-Komponente des demodulierten Messsignals sich neben einem höchstem Amplituden-Peak sich wiederholend minimal ist.

4. Optisches Messsystem nach Anspruch 3, **dadurch gekennzeichnet, dass** die optische Weglängendifferenz $\Delta S$ größer ist als ein 0,8 - faches oder kleiner als ein 1,2 - faches von $n*\Delta X$.

5. Optisches Messsystem nach Anspruch 3, **dadurch gekennzeichnet, dass** die optische Weglängendifferenz $\Delta S$ gleich ist $n*\Delta X$.

6. Optisches Messsystem nach einem der vorstehenden Ansprüche, **dadurch gekennzeichnet, dass** der Hauptlichtstrahls (9) mittels einer Dreieck-förmigen Wellenform moduliert ist.

7. Optisches Messsystem nach Anspruch 6, **dadurch gekennzeichnet, dass** sich $\Delta X$ zu $\lambda_0^2 / \Delta\lambda$ ergibt.

8. Optisches Messsystem nach einem der vorstehenden Ansprüche, **dadurch gekennzeichnet, dass** der Abstand (L) einer Innenseite (12) eines vorhandenen Gehäusefensters (3) des Lichtemitters (4) zu dem Lichtemitter (4) und/oder der Abstand (L) einer Innenseite (12) eines vorhandenen Gehäusefensters (7) des Lichtdetektors (8) zu dem Lichtdetektor (8) mindestens 8 mm, vorzugsweise mindestens 10 mm, weiter bevorzugt mindestens 15 mm beträgt.

9. Verfahren zur Gasdetektion nach der Wellenlängenmodulations-Spektroskopie, unter Verwendung eines optisches Messsystems (1) mit einem Lichtemitter (4) und mindestens einem Lichtdetektor (8) als optische Komponenten (20), wobei

zwischen dem Lichtemitter (4) und dem mindestens einem Lichtdetektor (8) mindestens eine optomechanische Komponente (15) angeordnet ist und die optischen Komponenten sowie die mindestens eine optomechanische Komponente für Lichtstrahlen optisch wirksame Grenzflächen aufweisen,

wobei der Lichtemitter (4) und der mindestens eine Lichtdetektor (8) gemeinsam in einem Gehäuse (2, 6) oder getrennt in jeweils einem Gehäuse (2, 6) angeordnet sind, wobei das Gehäuse (2, 6) optional ein Gehäusefenster (3, 7) aufweist, das eine optomechanische Komponente (15) bildet, und

wobei von dem Lichtemitter (4) ein modulierter Hauptlichtstrahl (9) einer mittleren Wellenlänge $\lambda_0$ und mit einer Modulationsspanne $\Delta\lambda$ emittiert und nach dem Durchtritt durch ein Gas oder Gasgemisch (10) zum Lichtdetektor (8) gelangt,

durch zumindest einen Streulichtstrahl (11), der an mindestens einer optisch wirksamen Grenzfläche von zumindest einer der optomechanischen Komponenten (15) in Richtung des Lichtemitters (4) und/oder des Lichtdetektors (8) anteilig aus dem Hauptlichtstrahl (9) reflektiert/gestreut wird, durch Interferenz mit dem Hauptlichtstrahl (9) Self-Mixing in dem Lichtemitter (4) und/oder Etaloneffekte an dem Lichtdetektor (8) verursacht werden,

wobei durch die Interferenz des mindestens einen Streulichtstrahls (11) mit dem Hauptlichtstrahl (9) ein interferierter Hauptlichtstrahl (9) gebildet wird, der mit dem Lichtdetektor (8) detektiert wird, und ein aus der Detektion des interferierten Hauptlichtstrahls (9) am Lichtdetektor (8) resultierendes Messsignal entsprechend einen Störsignalanteil und einen Hauptsignalanteil umfasst,

das Messsignal demoduliert wird, und durch den Störsignalanteil im Messsignal das demodulierte Messsignal beeinflusst wird,

wobei die räumliche Orientierung und/oder der Abstand (L) mindestens einer der optisch wirksamen Grenzflächen einer optischen und/oder optomechanischen Komponente (20, 15) zu einer zweiten optisch wirksamen Grenzfläche derselben oder einer weiteren, zweiten optischen und/oder optomechanischen Komponente (20, 15) an die Modulationsspanne $\Delta\lambda$ des modulierten Hauptlichtstrahls (9) der Wellenlänge $\lambda_0$ angepasst wird, dass die Auswirkung des Störsignals auf das Hauptsignal auf eine Fourierkomponente des demodulierten Messsignals für die Modulationsspanne $\Delta\lambda$ für alle Phasen minimal oder null ist, wobei die Abstände derart gewählt sind, dass Amplituden aller dominanten Interferenzen der Fourierkomponente im demodulierten Messsignal unterdrückt oder zumindest reduziert werden,

wobei eine optische Weglängendifferenz $\Delta S$ für den Hauptlichtstrahl (9) gegenüber dem Streulichtstrahl (11) bei der gewählten Modulationsspanne $\Delta\lambda$ des modulierten Hauptlichtstrahls (9) der Wellenlänge $\lambda_0$ gewählt wird, die durch die unterschiedliche optische Weglänge $S_{Haupt}$ des Hauptlichtstrahls (9) gegenüber der optischen Weglänge Sstreu des Streulichtstrahls (11) definiert ist,

das demodulierte Messsignal bedingt durch die optische Weglängendifferenz $\Delta S$ des Hauptlichtstrahls (9) gegenüber dem Streulichtstrahls (11) und die Interferenz des Störsignals mit dem Hauptsignal eine Periode A als freien Spektralbereich aufweist, die durch den Abstand der Transmissionsmaxima eines Transmissionsspektrums je zweier optisch wirksamer Grenzflächen einer optomechanischen und/oder optischen Komponente (15), jeweils einer optisch wirksamen Grenzfläche zweier optomechanischer Komponenten (15), jeweils einer optisch wirksamen Grenzfläche zweier optischer Komponenten (20) oder jeweils einer optisch wirksamen Grenzfläche einer optischen Komponente (20) und einer optomechanischen Komponente (15) bestimmt ist,

die Modulation des Hauptlichtstrahls (9) mittels einer beliebigen periodischen Wellenform durchgeführt wird, und

als Modulationsspanne $\Delta\lambda$ die Peak-to-Peak-Amplitude des zur Modulation des Hauptlichtstrahls (9) der Wellenlänge $\lambda_0$ verwendeten Modulationssignals verwendet wird.

10. Verfahren nach Anspruch 9, **dadurch gekennzeichnet, dass** die optische Weglängendifferenz $\Delta S$ größer als $0{,}5 \cdot \Delta X \cdot (m+1)$ bestimmt wird, mit $m = 2, 4, 6, ...$, entsprechend der Ordnung 2f, 4f, 6f,... des verwendeten Messsignals, wobei $\Delta X$ der Abstand ist, bei der eine Fourier-Komponente des demodulierten Messsignals neben einem höchstem Amplituden-Peak sich wiederholend minimal wird.

11. Verfahren nach Anspruch 9, **dadurch gekennzeichnet, dass** die optische Weglängendifferenz $\Delta S$ größer als ein 0,7 - faches oder kleiner als ein 1,3 - faches von $n \cdot \Delta X$ bestimmt wird, mit $n = 1, 2, 3, ....$, und mit $n \neq m/2$, mit $m = 2, 4, 6, ...$, entsprechend der Ordnung 2f, 4f, 6f,... des verwendeten Messsignals, wobei $\Delta X$ der Abstand ist, bei der eine Fourier-Komponente des demodulierten Messsignals neben einem höchstem Amplituden-Peak sich wiederholend minimal wird.

12. Verfahren nach Anspruch 11, **dadurch gekennzeichnet, dass** die optische Weglängendifferenz $\Delta S$ größer als ein 0,8 - faches oder kleiner als ein 1,2 - faches von $n \cdot \Delta X$ bestimmt wird.

**13.** Verfahren nach Anspruch 11, **dadurch gekennzeichnet, dass** die optische Weglängendifferenz $\Delta S$ bestimmt wird als n*$\Delta X$.

**14.** Verfahren nach einem der vorstehenden Ansprüche 9 bis 13, **dadurch gekennzeichnet, dass** der Hauptlichtstrahl (9) mittels einer Dreieck-förmigen Wellenform moduliert wird.

**15.** Verfahren nach Anspruch 14, **dadurch gekennzeichnet, dass** damit ein $\Delta X$ gewählt wird, das sich zu $\lambda_0^2 / \Delta\lambda$ ergibt.

**Claims**

**1.** An optical measuring system (1) for gas detection according to wavelength modulation spectroscopy, comprising:

a light emitter (4) and at least one light detector (8) forming optical components (20), and
at least one opto-mechanical component (15) arranged between the light emitter (4) and the at least one light detector (8),
wherein the optical components and the at least one opto-mechanical component have optically effective boundary surfaces for light beams,
wherein the light emitter (4) and the at least one light detector (8) are arranged together in a housing (2, 6) or separately in a respective housing (2, 6), and the housing (2, 6) optionally comprises a housing window (3, 7) forming an opto-mechanical component (15),
wherein the light emitter (4) emits a modulated main light beam (9) with a mean wavelength $\lambda_0$ with a modulation span $\Delta\lambda$, and
wherein at least one scatter light beam (11) that is partially reflected/scattered from the main light beam (9) at least at one optically effective boundary surface of at least one opto-mechanical component (15) in a direction of the light emitter (4) and/or of the light detector (8) causes self-mixing in the light emitter (4) and/or etalon effects at the light detector (8) through interference with the main light beam (9),
wherein the interference of the main light beam (9) with the scatter light beam (11) causes an interfered main light beam (9) which is detected by the light detector (8), and wherein a measuring signal resulting from the detection of the interfered main light beam (9) at the light detector (8) accordingly comprises an interfering signal portion and a main signal portion,
the measuring signal is demodulated, and the interfering signal portion in the measuring signal influences the demodulated measuring signal,
wherein
the spatial orientation and/or the distance (L) of at least one of the optically effective boundary surfaces of an optical and/or opto-mechanical component (20, 15) relative to a second optically effective boundary surface of the same or of a further, second optical and/or opto-mechanical component (20, 15) is adapted to the modulation span $\Delta\lambda$ of the modulated main light beam (9) of the wavelength $\lambda_0$ such that the effect of the interfering signal upon the main signal on a Fourier-component of the demodulated measuring signal for the modulation span $\Delta\lambda$ is minimal or zero for all phases, wherein the distances are selected such that amplitudes of all dominant interferences of the Fourier-component of the demodulated measuring signal are suppressed or at least reduced, wherein an optical path length difference $\Delta S$ exists for the main light beam (9) relative to the scatter light beam (11) at the selected modulation span $\Delta\lambda$ of the modulated main light beam (9) of the wavelength $\lambda_0$, which is defined by a difference between an optical path length $S_{Main}$ of the main light beam (9) and an optical path length $S_{Scatter}$ of the scatter light beam (11),
the demodulated measuring signal, due to the optical path length difference $\Delta S$ of the main light beam (9) relative to the scatter light beam (11) and due to the interference of the interfering signal with the main signal, has a period $\Lambda$ as a free spectral range, which is determined by the distance of the transmission maxima of a transmission spectrum of respective two optically effective boundary surfaces of an opto-mechanical and/or optical component (15), of one respective optically effective boundary surface of two opto-mechanical components (15), of one respective optically effective boundary surface of two optical components (20) or of one respective optically effective boundary surface of an optical component (20) and an opto-mechanical component (15),
wherein the modulation of the main light beam (9) is made with any periodic waveform, and
the modulation span $\Delta\lambda$ is the peak to peak amplitude of the modulation signal used for modulating the main light beam (9) of the wavelength $\lambda_0$.

**2.** Optical measuring system according to claim 1, **characterized in that** the optical path length difference $\Delta S$ is greater than $0.5*\Delta X*(m+1)$, with m = 2, 4, 6, ..., according to the order 2f, 4f, 6f,... of the employed measuring signal, wherein

$\Delta X$ is the distance where a Fourier-component of the demodulated measuring signal adjacent to a highest amplitude-peak is repeatedly minimal.

3. Optical measuring system according to claim 1, **characterized in that** the optical path length difference $\Delta S$ is greater than 0.7 times or less than 1.3 times $n^*\Delta X$, with n = 1, 2, 3, ...., and with $n \neq m/2$, with m = 2, 4, 6, ..., according to the order 2f, 4f, 6f,... of the employed measuring signal, wherein $\Delta X$ is the distance where a Fourier-component of the demodulated measuring signal adjacent to a highest amplitude-peak is repeatedly minimal.

4. Optical measuring system according to claim 3, **characterized in that** the optical path length difference $\Delta S$ is greater than 0.8 times or less than 1.2 times $n^*\Delta X$.

5. Optical measuring system according to claim 3, **characterized in that** the optical path length difference $\Delta S$ is equal to $n^*\Delta X$.

6. Optical measuring system according to one of the preceding claims, **characterized in that** the main light beam (9) is modulated by a triangular waveform.

7. Optical measuring system according to claim 6, **characterized in that** a $\Delta X$ is $\lambda_0^2 / \Delta\lambda$.

8. Optical measuring system according to one of the preceding claims, **characterized in that** a distance (L) of an inside (12) of a provided housing window (3) of the light emitter (4) to the light emitter (4) and/or a distance (L) of an inside (12) of a provided housing window (7) of the light detector (8) to the light detector (8) is at least 8 mm, preferably at least 10 mm, further preferably at least 15 mm.

9. Method for gas detection according to wavelength modulation spectroscopy, using an optical measuring system (1) comprising a light emitter (4) and at least one light detector (8) as optical components (20), wherein

   at least one opto-mechanical component (15) is arranged between the light emitter (4) and the at least one light detector (8) and the optical components and the at least one opto-mechanical component have optically effective boundary surfaces for light beams,
   wherein the light emitter (4) and the at least one light detector (8) are arranged together in a housing (2, 6) or separately in a respective housing (2, 6), wherein the housing (2, 6) optionally comprises a housing window (3, 7) forming an opto-mechanical component (15), and
   wherein a modulated main light beam (9) with a mean wavelength $\lambda_0$ and with a modulation span $\Delta\lambda$ is emitted from the light emitter (4) and reaches the light detector (8) after passing through a gas or gas mix (10);
   by at least one scatter light beam (11) that is partially reflected/scattered from the main light beam (9) at least at one optically effective boundary surface of at least one of the opto-mechanical components (15) in a direction of the light emitter (4) and/or of the light detector (8), through interference with the main light beam (9) self-mixing in the light emitter (4) and/or etalon effects at the light detector (8) are caused;
   wherein by the interference of the at least one scatter light beam (11) with the main light beam (9) an interfered main light beam (9) is formed, which is detected by the light detector (8), and a measuring signal resulting from the detection of the interfered main light beam (9) at the light detector (8) accordingly comprises an interfering signal portion and a main signal portion;
   the measuring signal is demodulated, and the demodulated measuring signal is influenced by the interfering signal portion in the measuring signal,
   wherein the spatial orientation and/or distance (L) of at least one of the optically effective boundary surfaces of an optical and/or opto-mechanical component (20, 15) relative to a second optically effective boundary surface of the same or of a further, second optical and/or opto-mechanical component (20, 15) is adapted to the modulation span $\Delta\lambda$ of the modulated main light beam (9) of the wavelength $\lambda_0$ such that the effect of the interfering signal upon the main signal on a Fourier-component of the demodulated measuring signal for the modulation span $\Delta\lambda$ is minimal or zero for all phases, wherein the distances are selected such that amplitudes of all dominant interferences of the Fourier-component in the demodulated measuring signal are suppressed or at least reduced, wherein an optical path length difference $\Delta S$ for the main light beam (9) relative to the scatter light beam (11) at the selected modulation span $\Delta\lambda$ of the modulated main light beam (9) of the wavelength $\lambda_0$ is selected, which is defined by the different optical path length $S_{Main}$ of the main light beam (9) relative to the optical path length $S_{Scatter}$ of the scatter light beam (11),
   the demodulated measuring signal, due to the optical path length difference $\Delta S$ of the main light beam (9) relative to the scatter light beam (11) and the interference of the interfering signal with the main signal, has a period $\Lambda$ as a

free spectral range, which is determined by the distance of the transmission maxima of a transmission spectrum of respective two optically effective boundary surfaces of an opto-mechanical and/or optical component (15), of one respective optically effective boundary surface of two opto-mechanical components (15), of one respeceive optically effective boundary surface of two optical components (20) or of one respective optically effective boundary surface of an optical component (20) and an opto-mechanical component (15),

wherein the modulation of the main light beam (9) is made with any periodic waveform,

and the peak to peak amplitude of the modulation signal used for modulating the main light beam (9) of the wavelength $\lambda_0$ is used as modulation span $\Delta\lambda$.

10. Method according to claim 9, **characterized in that** the optical path length difference $\Delta S$ is set greater than $0.5 * \Delta X * (m+1)$, with $m = 2, 4, 6, ...$, according to the order 2f, 4f, 6f,... of the employed measuring signal, and wherein $\Delta X$ is the distance where a Fourier-component of the demodulated measuring signal adjacent to a highest amplitude-peak is repeatedly minimal.

11. Method according to claim 9, **characterized in that** the optical path length difference $\Delta S$ is set greater than 0.7 times or less than 1.3 times $n * \Delta X$, with $n = 1, 2, 3, ....$, and with $n \neq m/2$, with $m = 2, 4, 6, ...$, according to the order 2f, 4f, 6f,... of the employed measuring signal, and wherein $\Delta X$ is the distance where a Fourier-component of the demodulated measuring signal adjacent to a highest amplitude-peak is repeatedly minimal.

12. Method according to claim 11, **characterized in that** the optical path length difference $\Delta S$ is set greater than 0.8 times or less than 1.2 times $n * \Delta X$.

13. Method according to claim 11, **characterized in that** the optical path length difference $\Delta S$ is set as $n * \Delta X$.

14. Method according to one of the preceding claims 9 - 13, **characterized in that** the main light beam (9) is modulated by a triangular waveform.

15. Method according to claim 14, **characterized in that** a $\Delta X$ is selected, that results in $\lambda_0^2 / \Delta\lambda$.

**Revendications**

1. Système de mesure optique (1) pour la détection de gaz selon la spectroscopie par modulation de longueur d'onde,

comportant un émetteur de lumière (4) et au moins un détecteur de lumière (8) comme composants optiques (20), et

comportant au moins un composant optomécanique (15) disposé entre l'émetteur de lumière (4) et l'au moins un détecteur de lumière (8),

dans lequel les composants optiques et l'au moins un composant optomécanique présentent des surfaces limites optiquement efficaces pour des faisceaux de lumière,

dans lequel l'émetteur de lumière (4) et l'au moins un détecteur de lumière (8) sont disposés ensemble dans un boîtier (2, 6) ou séparément dans respectivement un boîtier (2, 6), et le boîtier (2, 6) présente éventuellement une fenêtre de boîtier (3, 7) qui forme un composant optomécanique (15),

dans lequel l'émetteur de lumière (4) émet un faisceau de lumière principal (9) modulé d'une longueur d'onde moyenne $\lambda_0$ comportant une marge de modulation $\Delta\lambda$, et

au moins un faisceau de lumière diffusé (11) réfléchi/diffusé proportionnellement à partir du faisceau de lumière principal (9) sur au moins une surface limite optiquement efficace d'au moins un composant optomécanique (15) en direction de l'émetteur de lumière (4) et/ou du détecteur de lumière (8) conduit par interférence avec le faisceau de lumière principal (9) à un automélange dans l'émetteur de lumière (4) et/ou à des effets d'étalons sur le détecteur de lumière (8),

dans lequel l'interférence du faisceau de lumière principal (9) avec le faisceau de lumière diffusé (11) résulte en un faisceau de lumière principal (9) interféré qui est détecté par le détecteur de lumière (8), et dans lequel un signal de mesure résultant de la détection du faisceau de lumière principal (9) interféré au niveau du détecteur de lumière (8) comprend de manière correspondante une composante de signal parasite et une composante de signal principal,

le signal de mesure est démodulé et la composante de signal parasite dans le signal de mesure influence le signal de mesure démodulé,

dans lequel

l'orientation spatiale et/ou la distance (L) d'au moins l'une des surfaces limites optiquement efficaces d'un composant optique et/ou optomécanique (20, 15) par rapport à une seconde surface limite optiquement efficace du même composant ou d'un autre second composant optique et/ou optomécanique (20, 15) sont adaptées à la marge de modulation $\Delta\lambda$ du faisceau de lumière principal (9) modulé de longueur d'onde $\lambda_0$, en ce que l'effet du signal parasite sur le signal principal sur une composante de Fourier du signal de mesure démodulé est minimal ou nul pour la marge de modulation $\Delta\lambda$ pour toutes les phases, dans lequel les distances sont sélectionnées de telle sorte que les amplitudes de toutes les interférences dominantes de la composante de Fourier du signal de mesure démodulé sont supprimées ou au moins réduites,

dans lequel une différence de longueur de trajet optique $\Delta S$ pour le faisceau de lumière principal (9) par rapport au faisceau de lumière diffusé (11) existe à la marge de modulation $\Delta\lambda$ sélectionnée du faisceau de lumière principal (9) modulé de longueur d'onde $\lambda_0$, laquelle différence est définie par une longueur de trajet optique $S_{principal}$ différente du faisceau de lumière principal (9) par rapport à une longueur de trajet optique $S_{diffusé}$ du faisceau de lumière diffusé (11),

le signal de mesure démodulé présente, en raison de la différence de longueur de trajet optique $\Delta S$ du faisceau de lumière principal (9) par rapport au faisceau de lumière diffusé (11) et en raison de l'interférence du signal parasite avec le signal principal, une période $\Lambda$ en tant que domaine spectral libre qui est déterminée par la distance des maxima de transmission d'un spectre de transmission de respectivement deux surfaces limites optiquement efficaces d'un composant optomécanique et/ou optique (15), de respectivement une surface limite optiquement efficace de deux composants optomécaniques (15), de respectivement une surface limite optiquement efficace de deux composants optiques (20) ou de respectivement une surface limite optiquement efficace d'un composant optique (20) et d'un composant optomécanique (15),

la modulation du faisceau de lumière principal (9) est effectuée au moyen d'une forme d'onde périodique quelconque, et

la marge de modulation $\Delta\lambda$ est l'amplitude crête à crête du signal de modulation utilisé pour la modulation du faisceau de lumière principal (9) de longueur d'onde $\lambda_0$.

2. Système de mesure optique selon la revendication 1,
**caractérisé en ce que** la différence de longueur de trajet optique $\Delta S$ est supérieure à 0,5 * $\Delta X$ * (m + 1), avec m = 2, 4, 6, ..., correspondant à l'ordre 2f, 4f, 6f, ... du signal de mesure utilisé, dans lequel $\Delta X$ est la distance à laquelle une composante de Fourier du signal de mesure démodulé est minimale en se répétant à côté d'une crête d'amplitude la plus élevée.

3. Système de mesure optique selon la revendication 1,
**caractérisé en ce que** la différence de longueur de trajet optique $\Delta S$ est supérieure à 0,7 fois ou inférieure à 1,3 fois n * $\Delta X$, avec n = 1, 2, 3, ..., et avec n $\neq$ m / 2, avec m = 2, 4, 6, ..., correspondant à l'ordre 2f, 4f, 6f, ... du signal de mesure utilisé, dans lequel $\Delta X$ est la distance à laquelle une composante de Fourier du signal de mesure démodulé est minimale en se répétant à côté d'une crête d'amplitude la plus élevée.

4. Système de mesure optique selon la revendication 3,
**caractérisé en ce que** la différence de longueur de trajet optique $\Delta S$ est supérieure à 0,8 fois ou inférieure à 1,2 fois n * $\Delta X$.

5. Système de mesure optique selon la revendication 3,
**caractérisé en ce que** la différence de longueur de trajet optique $\Delta S$ est égale à n * $\Delta X$.

6. Système de mesure optique selon l'une des revendications précédentes, **caractérisé en ce que** le faisceau de lumière principal (9) est modulé au moyen d'une forme d'onde triangulaire.

7. Système de mesure optique selon la revendication 6,
**caractérisé en ce que** $\Delta X$ est obtenu par $\lambda_0^2 / \Delta\lambda$.

8. Système de mesure optique selon l'une des revendications précédentes, **caractérisé en ce que** la distance (L) entre une face intérieure (12) d'une fenêtre de boîtier (3) existante de l'émetteur de lumière (4) et l'émetteur de lumière (4) et/ou la distance (L) entre une face intérieure (12) d'une fenêtre de boîtier (7) existante du détecteur de lumière (8) et le détecteur de lumière (8) sont d'au moins 8 mm, de préférence d'au moins 10 mm, plus préférablement d'au moins 15 mm.

9. Procédé pour la détection de gaz selon la spectroscopie par modulation de longueur d'onde, à l'aide d'un système de mesure optique (1) comportant un émetteur de lumière (4) et au moins un détecteur de lumière (8) comme composants optiques (20), dans lequel

au moins un composant optomécanique (15) est disposé entre l'émetteur de lumière (4) et l'au moins un détecteur de lumière (8) et les composants optiques ainsi que l'au moins un composant optomécanique présentent des surfaces limites optiquement efficaces pour des rayons de lumière,

dans lequel l'émetteur de lumière (4) et l'au moins un détecteur de lumière (8) sont disposés ensemble dans un boîtier (2, 6) ou séparément dans respectivement un boîtier (2, 6), dans lequel le boîtier (2, 6) présente éventuellement une fenêtre de boîtier (3, 7) qui forme un composant optomécanique (15), et

dans lequel un faisceau de lumière principal (9) modulé d'une longueur d'onde moyenne $\lambda_0$ et comportant une marge de modulation $\Delta\lambda$ est émis par l'émetteur de lumière (4) et parvient au détecteur de lumière (8) après avoir traversé un gaz ou un mélange de gaz (10),

un automélange dans l'émetteur de lumière (4) et/ou des effets d'étalons sur le détecteur de lumière (8) sont provoqués par interférence avec le faisceau de lumière principal (9) par au moins un faisceau de lumière diffusé (11) qui est réfléchi/diffusé proportionnellement à partir du faisceau de lumière principal (9) sur au moins une surface limite optiquement efficace d'au moins l'un des composants optomécaniques (15) en direction de l'émetteur de lumière (4) et/ou du détecteur de lumière (8),

dans lequel un faisceau de lumière principal (9) interféré détecté avec le détecteur de lumière (8) est formé par interférence de l'au moins un faisceau de lumière diffusé (11) avec le faisceau de lumière principal (9), et un signal de mesure résultant de la détection du faisceau de lumière principal (9) interféré au niveau du détecteur de lumière (8) comprend de manière correspondante une composante de signal parasite et une composante de signal principal,

le signal de mesure est démodulé et le signal de mesure démodulé est influencé par la composante de signal parasite dans le signal de mesure,

dans lequel l'orientation spatiale et/ou la distance (L) d'au moins l'une des surfaces limites optiquement efficaces d'un composant optique et/ou optomécanique (20, 15) par rapport à une seconde surface limite optiquement efficace du même composant ou d'un autre second composant optique et/ou optomécanique (20, 15) sont adaptées à la marge de modulation $\Delta\lambda$ du faisceau de lumière principal (9) modulé de longueur d'onde $\lambda_0$, en ce que l'effet du signal parasite sur le signal principal sur une composante de Fourier du signal de mesure démodulé est minimal ou nul pour la marge de modulation $\Delta\lambda$ pour toutes les phases, dans lequel les distances sont sélectionnées de telle sorte que les amplitudes de toutes les interférences dominantes de la composante de Fourier dans le signal de mesure démodulé sont supprimées ou au moins réduites,

dans lequel une différence de longueur de trajet optique $\Delta S$ pour le faisceau de lumière principal (9) par rapport au faisceau de lumière diffusé (11) est sélectionnée à la marge de modulation $\Delta\lambda$ sélectionnée du faisceau de lumière principal (9) modulé de longueur d'onde $\lambda_0$, laquelle différence est définie par la longueur de trajet optique $S_{principal}$ différente du faisceau de lumière principal (9) par rapport à la longueur de trajet optique $S_{diffusé}$ du faisceau de lumière diffusé (11),

le signal de mesure démodulé présente, en raison de la différence de longueur de trajet optique $\Delta S$ du faisceau de lumière principal (9) par rapport au faisceau de lumière diffusé (11) et en raison de l'interférence du signal parasite avec le signal principal, une période $\Lambda$ en tant que domaine spectral libre qui est déterminée par la distance des maxima de transmission d'un spectre de transmission de respectivement deux surfaces limites optiquement efficaces d'un composant optomécanique et/ou optique (15), de respectivement une surface limite optiquement efficace de deux composants optomécaniques (15), de respectivement une surface limite optiquement efficace de deux composants optiques (20) ou de respectivement une surface limite optiquement efficace d'un composant optique (20) et d'un composant optomécanique (15),

la modulation du faisceau de lumière principal (9) est effectuée au moyen d'une forme d'onde périodique quelconque, et

l'amplitude crête à crête du signal de modulation utilisé pour la modulation du faisceau de lumière principal (9) de longueur d'onde $\lambda_0$ est utilisée comme marge de modulation $\Delta\lambda$.

10. Procédé selon la revendication 9, **caractérisé en ce que** la différence de longueur de trajet optique $\Delta S$ est déterminée comme étant supérieure à $0{,}5 * \Delta X * (m + 1)$, avec $m = 2, 4, 6, ...$, correspondant à l'ordre 2f, 4f, 6f, ... du signal de mesure utilisé, dans lequel $\Delta X$ est la distance à laquelle une composante de Fourier du signal de mesure démodulé est minimale en se répétant à côté d'une crête d'amplitude la plus élevée.

11. Procédé selon la revendication 9, **caractérisé en ce que** la différence de longueur de trajet optique $\Delta S$ est déterminée comme étant supérieure à 0,7 fois ou inférieure à 1,3 fois $n * \Delta X$, avec $n = 1, 2, 3, ...$, et avec $n \neq m/2$, avec $m = 2, 4, 6, ...$, correspondant à l'ordre 2f, 4f, 6f, ... du signal de mesure utilisé, dans lequel $\Delta X$ est la distance à laquelle une composante de Fourier du signal de mesure démodulé devient minimale en se répétant à côté d'une crête d'amplitude la plus élevée.

12. Procédé selon la revendication 11, **caractérisé en ce que** la différence de longueur de trajet optique $\Delta S$ est déterminée comme étant supérieure à 0,8 fois ou inférieure à 1,2 fois n * $\Delta X$.

13. Procédé selon la revendication 11, **caractérisé en ce que** la différence de longueur de trajet optique $\Delta S$ est déterminée comme étant n * $\Delta X$.

14. Procédé selon l'une des revendications 9 à 13 précédentes,
**caractérisé en ce que** le faisceau de lumière principal (9) est modulé au moyen d'une forme d'onde triangulaire.

15. Procédé selon la revendication 14, **caractérisé en ce qu'un** $\Delta X$ obtenu par $\lambda_0^2 / \Delta\lambda$ est sélectionné.

Fig. 1

**signal on photodiode**

Fig. 2a

**signal on photodiode**

Fig. 2b

**signal on photodiode**

Fig. 2c

Fig. 3a

Fig. 3b

Fig. 3c

Fig. 4

Fig. 5

Fig. 6

2f

4f

6f

a

b

c

Fig. 8

Fig. 7a

Fig. 7b

Fig. 7c

Fig. 7d

**IN DER BESCHREIBUNG AUFGEFÜHRTE DOKUMENTE**

**In der Beschreibung aufgeführte Patentdokumente**

- US 4934816 A

**In der Beschreibung aufgeführte Nicht-Patentliteratur**

- *Appl. Phys.B*, 2007, vol. 87, 523-530
- *Opt. Soc. Am. B*, 1985, vol. 2, 1464
- *Appl. Opt.*, 1980, vol. 19, 3349-3354
- Efficient Reduction of Fringe Noise in Trace Gas Detection with Diode Laser Multipass Absorption Spectroscopy. **SHANG-QIAN WU et al.** JAPANESE JOURNAL OF APPLIED PHYSICS. JAPAN SOCIETY OF APPLIED PHYSICS, 01 July 2000, 4034-4040
- **EHLERS et al.** Use of etalon-immune distances to reduce the influence of background signals in frequency-modulation spectroscopy and noise-immune cavity-enhanced optical heterodyne molecular spectroscopy. *J. Opt. Soc. Am. B*, 2014, vol. 31, 2938-2945